# EUROPEAN PATENT APPLICATION

(11) **EP 4 486 042 A2**
(43) Date of publication of application: **01.01.2025**
(21) Application number: 24195734.9
(22) Date of filing: 31.12.2019
(51) Int. Cl.: H04W 72/20

(54) **SIDELINK COMMUNICATION METHOD AND APPARATUS**

(62) Divisional of application: 19958341.0
(71) Applicant: Huawei Technologies Co., Ltd., Shenzhen, Guangdong 518129 (CN)
(72) Inventor: LI, Xiangyu, Shenzhen, 518129 (CN); PENG, Wenjie, Shenzhen, 518129 (CN); WANG, Jun, Shenzhen, 518129 (CN); DAI, Mingzeng, Shenzhen, 518129 (CN)
(74) Representative: Pfenning, Meinig & Partner mbB

(57) **Abstract**

A sidelink communication method and an apparatus are disclosed, to resolve a problem that SL communication quality deteriorates because QoS flows that support different carriers are mapped to a same SLRB. The method includes: A terminal device sends first information to a network device, where the first information includes a first destination address, a first carrier index, and a first quality of service QoS parameter, and there is a correspondence between the first destination address, the first carrier index, and the first QoS parameter. The network device receives the first information from the terminal device. The network device determines sidelink radio bearer SLRB configuration information based on the first information, and sends the SLRB configuration information to the terminal device. The terminal device receives the sidelink radio bearer SLRB configuration information from the network device

## Description

### TECHNICAL FIELD

This application relates to the field of communication technologies, and in particular, to a sidelink communication method and an apparatus.

### BACKGROUND

Since long term evolution (long term evolution, LTE) R14, the 3rd Generation Partnership Project (3rd Generation Partnership Project, 3GPP), namely, an international organization for standardization, has initiated research on vehicle-to-everything (vehicle-to-everything, V2X), and proposed a V2X communication architecture. In the V2X communication architecture, data may be directly transmitted between terminal devices through a sidelink (sidelink, SL).

Before performing SL communication, a terminal device obtains sidelink radio bearer (sidelink radio bearer, SLRB) configuration information from a network device. The terminal device establishes an SLRB based on the SLRB configuration information, and maps a quality of service (quality of service, QoS) flow to the corresponding SLRB. Because different QoS flows in one destination address may support different carriers, the terminal device may map the QoS flows supporting the different carriers to a same SLRB. However, when data on the corresponding SLRB is transmitted based on a carrier resource, SL communication may be performed based on a carrier that is not supported by some QoS flows. Consequently, SL communication quality deteriorates.

### SUMMARY

This application provides a sidelink communication method and an apparatus, to resolve a problem that SL communication quality deteriorates because QoS flows that support different carriers are mapped to a same SLRB.

According to a first aspect, a sidelink communication method is provided. The method includes the following steps: A terminal device sends first information to a network device, where the first information includes a first destination address, a first carrier index, and a first quality of service QoS parameter, and there is a correspondence between the first destination address, the first carrier index, and the first QoS parameter. In this way, the terminal device may indicate, to the network device by using the first information, carrier information corresponding to each QoS parameter in a destination address, and the network device determines an SLRB configuration based on the correspondence, so that a configuration of a QoS flow can be mapped to an SLRB corresponding to a carrier supported by the QoS flow, to avoid SL transmission of a data packet of the QoS flow by using a carrier frequency that is not supported by the QoS flow. Therefore, accuracy of the SLRB configuration is improved, and SL communication quality is improved.

In a possible design, the terminal device receives sidelink radio bearer SLRB configuration information from the network device. The SLRB configuration determined by the network device is determined based on a carrier supported by a QoS flow. After receiving the SLRB configuration information, the terminal device does not map the QoS flow to an SLRB corresponding to a carrier that is not supported by the QoS flow, to improve the SL communication quality.

In a possible design, the first information further includes a second carrier index, and there is a correspondence between the first QoS parameter and the second carrier index.

In a possible design, the first information further includes a second QoS parameter, and there is a correspondence between the second QoS parameter and the first carrier index.

In a possible design, the QoS parameter includes a QoS flow identifier and/or a QoS profile.

In a possible design, the SLRB configuration information includes one or more of the QoS parameter, destination address information, and carrier information.

In a possible design, the first information may be reported in a full information reporting (full information reporting) manner or a delta information reporting (delta information reporting) manner.

According to a second aspect, a sidelink communication method is provided. The method includes the following steps: A terminal device sends first information to a network device, where the first information includes a first destination address, a first carrier index, and at least one quality of service QoS parameter, there is a correspondence between the first destination address, the first carrier index, and the at least one QoS parameter, and each QoS flow corresponding to the at least one QoS parameter supports a carrier indicated by the first carrier index. The terminal device reports, to the network device, a carrier index of a carrier supported by each QoS flow corresponding to a QoS parameter in a destination address. After receiving the reported first information, when configuring an SLRB for the terminal based on the first information, the network device does not configure a carrier that is not supported by the QoS flow in the destination address, to avoid SL transmission of a data packet of the QoS flow by using a carrier frequency that is not supported by the QoS flow. Therefore, accuracy of configuring the SLRB is improved, and SL communication quality is improved.

That each QoS flows corresponding to the at least one QoS parameter supports a carrier indicated by the first carrier index may be understood as that each QoS flow corresponding to the at least one QoS parameter in the first destination address supports SL transmission on a first carrier indicated by the first carrier index.

In a possible design, after sending the first information to the network device, the terminal device receives sidelink radio bearer SLRB configuration information from the network device.

Optionally, if an index of a carrier supported by all QoS flows corresponding to a plurality of QoS parameters that are associated with the destination address and that have a same QoS profile is an empty set, an access stratum of the terminal device sends indication information to an upper layer (for example, a V2X layer). The indication information is used to indicate that a QoS flow or a service corresponding to the same QoS profile associated with the destination address is improper. Optionally, after receiving the indication information, the upper layer of the terminal device triggers a PC5-S link modification (PC5-S link modification) process with a peer terminal device, or modifies information about the QoS parameter/service associated with the destination address.

Optionally, if an index of a carrier supported by all QoS flows corresponding to a plurality of QoS parameters that are associated with the first destination address and that have a same QoS profile is an empty set, the first destination address in the first information reported by the terminal device to the network device does not include information about the plurality of QoS flows. This indicates that SL transmission of any carrier index by using the QoS flows corresponding to the plurality of QoS parameters is not supported in the first destination address. Alternatively, the plurality of QoS parameters are associated with one piece of indication information, and the indication information is used to indicate that SL transmission of any carrier index by using the QoS flows corresponding to the plurality of QoS parameters is not supported in the first destination address.

In a possible design, the QoS parameter includes a QoS flow identifier and/or a QoS profile.

In a possible design, the method further includes: The terminal device obtains second information, where the second information includes a service identifier and the first carrier index. The terminal device determines that a QoS flow of a service corresponding to the service identifier supports the carrier indicated by the first carrier index.

In a possible design, the destination address may be represented by using a destination address identifier and/or a communication type.

In a possible design, the SLRB configuration information includes one or more of the QoS parameter, destination address information, and carrier information.

According to a third aspect, a sidelink communication method is provided. The method includes the following steps: A terminal device obtains sidelink radio bearer SLRB configuration information, where the sidelink radio bearer SLRB configuration information includes one or more quality of service QoS parameters. The terminal device establishes an SLRB for a destination address based on the SLRB configuration information, where the SLRB is associated with one or more QoS parameters corresponding to the destination address. The terminal device determines carrier information supported by the SLRB, where the carrier information is carrier information supported by one or more pieces of QoS flow information that correspond to destination address information. In this way, when QoS flows associated with different carrier information are mapped to a same SLRB/LCH based on a network configuration, the terminal may determine carrier information allowed by the SLRB/LCH, and therefore does not perform SL transmission by using carrier information that is not allowed.

Optionally, in consideration of PDCP duplication, one SLRB is associated with a plurality of LCHs. When the terminal device determines carrier information supported by the SLRB, if a quantity of pieces of the supported carrier information is less than a quantity of LCHs associated with the SLRB, the terminal device selects some LCHs to perform SL transmission based on the PDCP duplication, to ensure normal SL communication.

In a possible design, the QoS flow information includes one or more of a QoS flow identifier, a QoS profile, and the destination address information.

In a possible design, that a terminal device obtains sidelink radio bearer SLRB configuration information may be implemented in the following manner: The terminal device obtains the SLRB configuration information by using an RRC message, a broadcast message, or a pre-configuration.

According to a fourth aspect, a sidelink communication method is provided. The method includes the following steps: A terminal device obtains sidelink radio bearer SLRB configuration information, where the SLRB configuration information includes M quality of service QoS parameters, M pieces of QoS flow information are associated with M different carrier information lists, and M is an integer greater than 1. The terminal device determines that carriers supported by N QoS flows corresponding to N QoS parameters in M QoS parameters corresponding to a first destination address are not completely the same. The terminal device establishes N SLRBs for the QoS flows corresponding to the N QoS parameters that correspond to the first destination address, where the QoS flows corresponding to the N QoS parameters that correspond to the first destination address are in one-to-one correspondence with the N SLRBs. The terminal device may establish a plurality of SLRBs/LCHs in one destination address based on one piece of SLRB configuration information. In this way, it can be ensured that all QoS flows mapped to one SLRB/LCH are associated with same carrier information, so that SL transmission can be normally performed.

In a possible design, the terminal device allocates different SLRB identifiers or logical channel LCH identifiers to the M SLRBs.

In a possible design, the M SLRBs have a same PDCP entity parameter, a same RLC entity parameter, and a same LCH parameter.

In a possible design, the QoS parameter includes one or more of a QoS flow identifier, a QoS profile, and destination address information.

In a possible design, that a terminal device obtains sidelink radio bearer SLRB configuration information may be implemented in the following manner: The terminal device obtains the SLRB configuration information by using an RRC message, a broadcast message, or a pre-configuration.

According to a fifth aspect, a sidelink communication method is provided. The method includes the following steps: A network device receives first information from a terminal device, where the first information includes a first destination address, a first carrier index, and a first quality of service QoS parameter, and there is a correspondence between the first destination address, the first carrier index, and the first QoS parameter. The network device determines sidelink radio bearer SLRB configuration information based on the first information, and sends the SLRB configuration information to the terminal device. In this way, the network device receives the first information from the terminal device, where the first information includes the correspondence, and the network device may determine an SLRB configuration based on the correspondence, so that a configuration of a QoS flow can be mapped to an SLRB corresponding to a carrier supported by the QoS flow, to avoid SL transmission of a data packet of the QoS flow by using a carrier frequency that is not supported by the QoS flow. Therefore, accuracy of the SLRB configuration is improved, and SL communication quality is improved.

In a possible design, the first information further includes a second carrier index, and there is a correspondence between the first QoS parameter and the second carrier index.

In a possible design, the first information further includes a second QoS parameter, and there is a correspondence between the second QoS parameter and the first carrier index.

In a possible design, the QoS parameter includes a QoS flow identifier and/or a QoS profile.

In a possible design, the SLRB configuration information includes one or more of the QoS parameter, destination address information, and carrier information.

According to a sixth aspect, a sidelink communication method is provided. The method includes the following steps: A network device receives first information from a terminal device, where the first information includes a first destination address, a first carrier index, and at least one quality of service QoS parameter, there is a correspondence between the first destination address, the first carrier index, and the at least one QoS parameter, and each QoS flow corresponding to the at least one QoS parameter supports a carrier indicated by the first carrier index. The network device determines sidelink radio bearer SLRB configuration information based on the first information, and sends the SLRB configuration information to the terminal device. The network device receives, from the terminal, a carrier index of a carrier supported by each QoS flow corresponding to a QoS parameter in a destination address. After receiving the reported first information, when configuring an SLRB for the terminal based on the first information, the network device does not configure a carrier that is not supported by the QoS flow in the destination address, to avoid SL transmission of a data packet of the QoS flow by using a carrier frequency that is not supported by the QoS flow. Therefore, accuracy of configuring the SLRB is improved, and SL communication quality is improved.

That each QoS flows corresponding to the at least one QoS parameter supports a carrier indicated by the first carrier index may be understood as that each QoS flow corresponding to the at least one QoS parameter in the first destination address supports SL transmission on a first carrier indicated by the first carrier index.

In a possible design, the QoS parameter includes a QoS flow identifier and/or a QoS profile.

In a possible design, the destination address may be represented by using a destination address identifier and/or a communication type.

In a possible design, the SLRB configuration information includes one or more of the QoS parameter, destination address information, and carrier information.

According to a seventh aspect, a sidelink communication method is provided. The method may be performed by a terminal device. The method includes the following steps: The terminal device obtains a correspondence between geographic area information and carrier information. The terminal device determines, based on the correspondence between the geographic area information and the carrier information, carrier information supported for SL communication in a current geographic area. The terminal device determines, by using the foregoing process, the carrier information supported in the current geographic area, to perform subsequent SL communication, so as to ensure that policies and regulations are met and quality of the SL communication is met.

Optionally, the terminal device may obtain the correspondence between the geographic area information and the carrier information by using an RRC message, a SIB message, or a pre-configuration. The terminal device may be in an RRC connected mode or an RRC non-connected mode.

Optionally, the carrier information may include a carrier index and/or a synchronization type supported by a carrier.

Optionally, different geographic area information may also correspond to same carrier information.

Optionally, a geographical location may be at a country or region level. For example, different countries or regions correspond to different geographical areas.

Optionally, a geographical location may be at a cell level. For example, different cells correspond to different geographical areas.

Optionally, a geographical location may be at a zone (zone) level. For example, different zones in one cell correspond to different geographical areas.

According to an eighth aspect, an apparatus is provided. The apparatus may be a terminal device, may be an apparatus (for example, a chip, a chip system, or a circuit) in the terminal device, or may be an apparatus that can be used together with the terminal device. In a design, the apparatus may include modules that are in one-to-one correspondence with the methods/operations/steps/actions described in the first aspect. The modules may be implemented by using a hardware circuit, software, or a combination of the hardware circuit and the software. In a design, the apparatus may include a processing module and a communication module. The processing module is configured to invoke the communication module to perform a receiving function and/or a sending function. For example, the communication module is configured to: send first information to a network device, where the first information includes a first destination address, a first carrier index, and a first quality of service QoS parameter, and there is a correspondence between the first destination address, the first carrier index, and the first QoS parameter; and receive sidelink radio bearer SLRB configuration information from the network device. In this way, the terminal device may indicate, to the network device by using the first information, carrier information corresponding to each QoS parameter in a destination address, and the network device determines an SLRB configuration based on the correspondence, so that a configuration of a QoS flow can be mapped to an SLRB corresponding to a carrier supported by the QoS flow, to avoid SL transmission of a data packet of the QoS flow by using a carrier frequency that is not supported by the QoS flow. Therefore, accuracy of the SLRB configuration is improved, and SL communication quality is improved.

In a possible design, the first information further includes a second carrier index, and there is a correspondence between the first QoS parameter and the second carrier index.

In a possible design, the first information further includes a second QoS parameter, and there is a correspondence between the second QoS parameter and the first carrier index.

In a possible design, the QoS parameter includes a QoS flow identifier and/or a QoS profile.

In a possible design, the SLRB configuration information includes one or more of the QoS parameter, destination address information, and carrier information.

In a possible design, the first information may be reported in a full information reporting (full information reporting) manner or a delta information reporting (delta information reporting) manner.

According to a ninth aspect, an apparatus is provided. The apparatus may be a terminal device, may be an apparatus (for example, a chip, a chip system, or a circuit) in the terminal device, or may be an apparatus that can be used together with the terminal device. In a design, the apparatus may include modules that are in one-to-one correspondence with the methods/operations/steps/actions described in the second aspect. The modules may be implemented by using a hardware circuit, software, or a combination of the hardware circuit and the software. In a design, the apparatus may include a processing module and a communication module. The processing module is configured to invoke the communication module to perform a receiving function and/or a sending function. Examples are as follows:

The processing module is configured to: invoke the communication module to send first information to a network device, where the first information includes a first destination address, a first carrier index, and at least one quality of service QoS parameter, there is a correspondence between the first destination address, the first carrier index, and the at least one QoS parameter, and each QoS flow corresponding to the at least one QoS parameter supports a carrier indicated by the first carrier index; and receive sidelink radio bearer SLRB configuration information from the network device. The terminal device reports, to the network device, a carrier index of a carrier supported by each QoS flow corresponding to a QoS parameter in a destination address. After receiving the reported first information, when configuring an SLRB for the terminal based on the first information, the network device does not configure a carrier that is not supported by the QoS flow in the destination address, to avoid SL transmission of a data packet of the QoS flow by using a carrier frequency that is not supported by the QoS flow. Therefore, accuracy of configuring the SLRB is improved, and SL communication quality is improved.

That each QoS flows corresponding to the at least one QoS parameter supports a carrier indicated by the first carrier index may be understood as that each QoS flow corresponding to the at least one QoS parameter in the first destination address supports SL transmission on a first carrier indicated by the first carrier index.

Optionally, if an index of a carrier supported by all QoS flows corresponding to a plurality of QoS parameters that are associated with the destination address and that have a same QoS profile is an empty set, an access stratum of the terminal device sends indication information to an upper layer (for example, a V2X layer). The indication information is used to indicate that a QoS flow or a service corresponding to the same QoS profile associated with the destination address is improper. Optionally, after receiving the indication information, the upper layer of the terminal device triggers a PC5-S link modification (PC5-S link modification) process with a peer terminal device, or modifies information about the QoS parameter/service associated with the destination address.

Optionally, if an index of a carrier supported by all QoS flows corresponding to a plurality of QoS parameters that are associated with the first destination address and that have a same QoS profile is an empty set, the first destination address in the first information reported by the terminal device to the network device does not include information about the plurality of QoS flows. This indicates that SL transmission of any carrier index by using the QoS flows corresponding to the plurality of QoS parameters is not supported in the first destination address. Alternatively, the plurality of QoS parameters are associated with one piece of indication information, and the indication information is used to indicate that SL transmission of any carrier index by using the QoS flows corresponding to the plurality of QoS parameters is not supported in the first destination address.

In a possible design, the QoS parameter includes a QoS flow identifier and/or a QoS profile.

In a possible design, the processing module is further configured to: obtain second information, where the second information includes a service identifier and the first carrier index; and determine that a QoS flow of a service corresponding to the service identifier supports the carrier indicated by the first carrier index.

In a possible design, the destination address may be represented by using a destination address identifier and/or a communication type.

In a possible design, the SLRB configuration information includes one or more of the QoS parameter, destination address information, and carrier information.

According to a tenth aspect, an apparatus is provided. The apparatus may be a terminal device, may be an apparatus (for example, a chip, a chip system, or a circuit) in the terminal device, or may be an apparatus that can be used together with the terminal device. In a design, the apparatus may include modules that are in one-to-one correspondence with the methods/operations/steps/actions described in the third aspect. The modules may be implemented by using a hardware circuit, software, or a combination of the hardware circuit and the software. In a design, the apparatus may include a processing module and a communication module. The processing module is configured to invoke the communication module to perform a receiving function and/or a sending function. Examples are as follows:

The processing module is configured to: obtain sidelink radio bearer SLRB configuration information, where the sidelink radio bearer SLRB configuration information includes one or more quality of service QoS parameters; establish an SLRB for a destination address based on the SLRB configuration information, where the SLRB is associated with one or more QoS parameters corresponding to the destination address; and determine carrier information supported by the SLRB, where the carrier information is carrier information supported by one or more pieces of QoS flow information that correspond to destination address information. In this way, when QoS flows associated with different carrier information are mapped to a same SLRB/LCH based on a network configuration, the terminal may determine carrier information allowed by the SLRB/LCH, and therefore does not perform SL transmission by using carrier information that is not allowed.

Optionally, in consideration of PDCP duplication, one SLRB is associated with a plurality of LCHs. When the terminal device determines carrier information supported by the SLRB, if a quantity of pieces of the supported carrier information is less than a quantity of LCHs associated with the SLRB, the terminal device selects some LCHs to perform SL transmission based on the PDCP duplication, to ensure normal SL communication.

In a possible design, the QoS flow information includes one or more of a QoS flow identifier, a QoS profile, and the destination address information.

In a possible design, when obtaining the sidelink radio bearer SLRB configuration information, the processing module is specifically configured to obtain the SLRB configuration information by using an RRC message, a broadcast message, or a pre-configuration.

According to an eleventh aspect, an apparatus is provided. The apparatus may be a terminal device, may be an apparatus (for example, a chip, a chip system, or a circuit) in the terminal device, or may be an apparatus that can be used together with the terminal device. In a design, the apparatus may include modules that are in one-to-one correspondence with the methods/operations/steps/actions described in the fourth aspect. The modules may be implemented by using a hardware circuit, software, or a combination of the hardware circuit and the software. In a design, the apparatus may include a processing module and a communication module. The processing module is configured to invoke the communication module to perform a receiving function and/or a sending function. Examples are as follows:

The processing module is configured to: obtain sidelink radio bearer SLRB configuration information, where the SLRB configuration information includes M quality of service QoS parameters, M pieces of QoS flow information are associated with M different carrier information lists, and M is an integer greater than 1; determine that carriers supported by N QoS flows corresponding to N QoS parameters in M QoS parameters corresponding to a first destination address are not completely the same; and establish N SLRBs for the QoS flows corresponding to the N QoS parameters that correspond to the first destination address, where the QoS flows corresponding to the N QoS parameters that correspond to the first destination address are in one-to-one correspondence with the N SLRBs. The terminal device may establish a plurality of SLRBs/LCHs in one destination address based on one piece of SLRB configuration information. In this way, it can be ensured that all QoS flows mapped to one SLRB/LCH are associated with same carrier information, so that SL transmission can be normally performed.

In a possible design, the processing module is further configured to allocate different SLRB identifiers or logical channel LCH identifiers to the M SLRBs.

In a possible design, the M SLRBs have a same PDCP entity parameter, a same RLC entity parameter, and a same LCH parameter.

In a possible design, the QoS parameter includes one or more of a QoS flow identifier, a QoS profile, and the destination address information.

In a possible design, when obtaining the sidelink radio bearer SLRB configuration information, the processing module is specifically configured to obtain the SLRB configuration information by using an RRC message, a broadcast message, or a pre-configuration.

According to a twelfth aspect, an apparatus is provided. The apparatus may be a network device, may be an apparatus (for example, a chip, a chip system, or a circuit) in the network device, or may be an apparatus that can be used together with the network device. In a design, the apparatus may include modules that are in one-to-one correspondence with the methods/operations/steps/actions described in the fifth aspect or the sixth aspect. The modules may be implemented by using a hardware circuit, software, or a combination of the hardware circuit and the software. In a design, the apparatus may include a processing module and a communication module. The processing module is configured to invoke the communication module to perform a receiving function and/or a sending function. Examples are as follows:

When the method according to the fifth aspect is performed, the communication module is configured to receive first information from a terminal device, where the first information includes a first destination address, a first carrier index, and a first quality of service QoS parameter, and there is a correspondence between the first destination address, the first carrier index, and the first QoS parameter. The processing module is configured to determine sidelink radio bearer SLRB configuration information based on the first information. The communication module is further configured to send the SLRB configuration information to the terminal device. In this way, the network device receives the first information from the terminal device, where the first information includes the correspondence, and the network device may determine an SLRB configuration based on the correspondence, so that a configuration of a QoS flow can be mapped to an SLRB corresponding to a carrier supported by the QoS flow, to avoid SL transmission of a data packet of the QoS flow by using a carrier frequency that is not supported by the QoS flow. Therefore, accuracy of the SLRB configuration is improved, and SL communication quality is improved.

When the method according to the sixth aspect is performed, the communication module is configured to receive first information from a terminal device, where the first information includes a first destination address, a first carrier index, and at least one quality of service QoS parameter, there is a correspondence between the first destination address, the first carrier index, and the at least one QoS parameter, and each QoS flow corresponding to the at least one QoS parameter supports a carrier indicated by the first carrier index. The processing module is configured to determine sidelink radio bearer SLRB configuration information based on the first information. The communication module is further configured to send the SLRB configuration information to the terminal device. The network device receives, from the terminal, a carrier index of a carrier supported by each QoS flow corresponding to a QoS parameter in a destination address. After receiving the reported first information, when configuring an SLRB for the terminal based on the first information, the network device does not configure a carrier that is not supported by the QoS flow in the destination address, to avoid SL transmission of a data packet of the QoS flow by using a carrier frequency that is not supported by the QoS flow. Therefore, accuracy of configuring the SLRB is improved, and SL communication quality is improved.

The processing module and the communication module may further perform operations corresponding to the method according to any one of the possible designs of the fifth aspect or the sixth aspect. Details are not described herein again.

According to a thirteenth aspect, an apparatus is provided. The apparatus may be a terminal device, may be an apparatus (for example, a chip, a chip system, or a circuit) in the terminal device, or may be an apparatus that can be used together with the terminal device. In a design, the apparatus may include modules that are in one-to-one correspondence with the methods/operations/steps/actions described in the fourth aspect. The modules may be implemented by using a hardware circuit, software, or a combination of the hardware circuit and the software. In a design, the apparatus may include a processing module and a communication module. The processing module is configured to invoke the communication module to perform a receiving function and/or a sending function. Examples are as follows:

The communication module is configured to: obtain a correspondence between geographic area information and carrier information; and determine, based on the correspondence between the geographic area information and the carrier information, carrier information supported for SL communication in a current geographic area. The terminal device determines, by using the foregoing process, the carrier information supported in the current geographic area, to perform subsequent SL communication, so as to ensure that policies and regulations are met and quality of the SL communication is met.

The processing module and the communication module may further perform operations corresponding to the method according to any one of seventh aspect or the possible designs of the seventh aspect. Details are not described herein again.

According to a fourteenth aspect, an embodiment of this application provides an apparatus. The apparatus includes a communication interface and a processor. The communication interface is used by the apparatus to communicate with another device, for example, to receive and send data or a signal. For example, the communication interface may be a transceiver, a circuit, a bus, a module, or a communication interface of another type, and the another device may be a network device. The processor is configured to invoke a group of programs, instructions, or data to perform the method according to the first aspect, the second aspect, the third aspect, the fourth aspect, the seventh aspect, or the possible designs thereof. The apparatus may further include a memory, configured to store the programs, instructions, or data invoked by the processor. The memory is coupled to the processor. When the processor executes the instructions or data stored in the memory, the method according to the first aspect, the second aspect, the third aspect, the fourth aspect, the seventh aspect, or the possible designs thereof can be implemented.

According to a fifteenth aspect, an embodiment of this application provides an apparatus. The apparatus includes a communication interface and a processor. The communication interface is used by the apparatus to communicate with another device, for example, to receive and send data or a signal. For example, the communication interface may be a transceiver, a circuit, a bus, a module, or a communication interface of another type, and the another device may be a terminal device. The processor is configured to invoke a group of programs, instructions, or data to perform the method according to the fifth aspect, the sixth aspect, or the possible designs thereof. The apparatus may further include a memory, configured to store the programs, instructions, or data invoked by the processor. The memory is coupled to the processor. When the processor executes the instructions or data stored in the memory, the method according to the fifth aspect, the sixth aspect, or the possible designs thereof can be implemented.

According to a sixteenth aspect, an embodiment of this application further provides a computer-readable storage medium. The computer-readable storage medium stores computer-readable instructions. When the computer-readable instructions are run on a computer, the computer is enabled to perform the method according to any one of the first aspect, the second aspect, the third aspect, the fourth aspect, the seventh aspect, or the possible designs thereof.

According to a seventeenth aspect, an embodiment of this application further provides a computer-readable storage medium including instructions. When the instructions are run on a computer, the computer is enabled to perform the method according to any one of the fifth aspect, the sixth aspect, or the possible designs thereof.

According to an eighteenth aspect, a computer program product including instructions is provided. When the computer program product is run on a computer, the computer is enabled to perform the method according to any one of the first aspect, the second aspect, the third aspect, the fourth aspect, the seventh aspect, or the possible designs thereof.

According to a nineteenth aspect, a computer program product including instructions is provided. When the computer program product is run on a computer, the computer is enabled to perform the method according to any one of the fifth aspect, the sixth aspect, or the possible designs thereof.

According to a twentieth aspect, an embodiment of this application provides a chip system. The chip system includes a processor, and may further include a memory. The chip system is configured to implement the method according to any one of the first aspect, the second aspect, the third aspect, the fourth aspect, the seventh aspect, or the possible designs thereof. The chip system may include a chip, or may include the chip and another discrete component.

According to a twenty-first aspect, an embodiment of this application provides a chip system. The chip system includes a processor, and may further include a memory. The chip system is configured to implement the method according to any one of the fifth aspect, the sixth aspect, or the possible designs thereof. The chip system may include a chip, or may include the chip and another discrete component.

According to a twenty-second aspect, an embodiment of this application provides a chip system. The chip system includes a processor, and may further include a memory. The chip system is configured to implement the method according to any one of the first aspect, the second aspect, the third aspect, the fourth aspect, the seventh aspect, or the possible designs thereof. The chip system may include a chip, or may include the chip and another discrete component.

According to a twenty-third aspect, an embodiment of this application provides a chip system. The chip system includes a processor, and may further include a memory. The chip system is configured to implement the method according to any one of the fifth aspect, the sixth aspect, or the possible designs thereof. The chip system may include a chip, or may include the chip and another discrete component.

According to a twenty-fourth aspect, an embodiment of this application provides a system. The system includes a terminal device and a network device. The terminal device is configured to perform the method according to any one of the first aspect, the second aspect, the third aspect, the fourth aspect, the seventh aspect, or the possible designs thereof, and the network device is configured to perform the method according to any one of the fifth aspect, the sixth aspect, or the possible designs thereof.

### BRIEF DESCRIPTION OF DRAWINGS

FIG. 1 is a schematic diagram of a V2X communication architecture according to an embodiment of this application;
FIG. 2 is a schematic flowchart 1 of a sidelink communication method according to an embodiment of this application;
FIG. 3 is a schematic flowchart 2 of a sidelink communication method according to an embodiment of this application;
FIG. 4 is a schematic diagram of carrier indexes supported by all QoS flows corresponding to QoS parameters according to an embodiment of this application;
FIG. 5 is a schematic flowchart 3 of a sidelink communication method according to an embodiment of this application;
FIG. 6 is a schematic diagram of carrier indexes supported by QoS flows corresponding to QoS parameters according to an embodiment of this application;
FIG. 7 is a schematic diagram in which a terminal device determines, based on SLRB configurations and carrier indexes supported by QoS flows, carrier indexes supported by an SLRB according to an embodiment of this application;
FIG. 8 is a schematic flowchart 4 of a sidelink communication method according to an embodiment of this application;
FIG. 9 is a schematic flowchart 5 of a sidelink communication method according to an embodiment of this application;
FIG. 10 is a schematic diagram 1 of a structure of an apparatus according to an embodiment of this application; and
FIG. 11 is a schematic diagram 2 of a structure of an apparatus according to an embodiment of this application.

### DESCRIPTION OF EMBODIMENTS

Embodiments of this application provide a sidelink communication method and an apparatus, to improve SL communication quality. The method and the apparatus are based on a same or similar concept of a same technology. Because a problem-resolving principle of the method is similar to that of the apparatus, mutual reference may be made to implementations of the apparatus and the method. Repeated parts are not described in detail. In descriptions of embodiments of this application, the term "and/or" describes an association relationship between associated objects and indicates that three relationships may exist. For example, A and/or B may indicate the following three cases: Only A exists, both A and B exist, and only B exists. The character "/" usually represents an "or" relationship between the associated objects. In this application, "at least one" means one or more, and "a plurality of" means two or more. In addition, it should be understood that, in the descriptions of this application, the terms such as "first", "second", and "third" are merely used for differentiation and description, but cannot be understood as an indication or implication of relative importance or an indication or implication of an order. Reference to "an embodiment", "some embodiments", or the like described in this specification means that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment, instead, they mean "one or more but not all of the embodiments", unless otherwise specifically emphasized. The terms "include", "contain", "have", and their variants all mean "include but are not limited to", unless otherwise specifically emphasized.

Technical solutions provided in this application may be applied to a device to device (device to device, D2D) scenario, and optionally, may be applied to a vehicle to everything (vehicle to everything, V2X) scenario. For example, D2D may be D2D in a long term evolution (long term evolution, LTE) communication system, may be D2D in a new radio (new radio, NR) communication system, or may be D2D in another communication system that may appear as technologies develop. Similarly, V2X may be LTE V2X or NR V2X, or may be V2X in another communication system that may appear as technologies develop.

For example, the V2X scenario may be specifically any one of the following systems: vehicle to vehicle (vehicle to vehicle, V2V) communication, vehicle to pedestrian (vehicle to pedestrian, V2P) communication, a vehicle to network (vehicle to network, V2N) service, vehicle to infrastructure (vehicle to infrastructure, V2I) communication, and the like.

One participant of V2N is a terminal device, and the other participant is a service entity. V2N is currently the most widely used form of the internet of vehicles, and a main function of V2N is to enable a vehicle to connect to a cloud server via a mobile network, to provide functions such as navigation, entertainment, and anti-theft through the cloud server.

Both participants of V2V are terminal devices. V2V may be used for information exchange and reminding between vehicles, and most typical application is an anti-collision safety system between the vehicles.

Both participants of V2P are terminal devices. V2P can be used to provide a safety warning to a pedestrian or a non-motor vehicle on a road.

In V2I, one participant is a terminal device, and the other participant is an infrastructure (or a road facility). V2I may be used for communication between a vehicle and an infrastructure. For example, the infrastructure may be a road, a traffic light, a barricade, or the like, and road management information such as a time sequence of a traffic light signal may be obtained.

In embodiments of this application, both a transmit end and a receive end in V2X may be D2D devices or V2X devices. For example, both the transmit end and the receive end in V2X may be terminal devices.

The terminal device in embodiments of this application may also be referred to as user equipment (user equipment, UE), a mobile station (mobile station, MS), a mobile terminal (mobile terminal, MT), or the like, and is a device that provides a user with voice or data connectivity, or may be an internet of things device. For example, the terminal device includes a handheld device, a vehicle-mounted device, or the like that has a wireless connection function. The terminal device may be a mobile phone (mobile phone), a tablet computer, a notebook computer, a palmtop computer, a mobile internet device (mobile internet device, MID), a wearable device (for example, a smart watch, a smart band, or a pedometer), a vehicle-mounted device (for example, a car, a bicycle, an electric car, an airplane, a ship, a train, or a high-speed train), a virtual reality (virtual reality, VR) device, an augmented reality (augmented reality, AR) device, a wireless terminal in industrial control (industrial control), a smart home device (for example, a refrigerator, a television, an air conditioner, or a power meter), an intelligent robot, workshop equipment, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or a flight device (for example, an intelligent robot, a hot air balloon, a drone, or an airplane). The terminal may alternatively be another device that has a terminal function. For example, the terminal may alternatively be a device that functions as a terminal in D2D communication or vehicle-to-everything communication.

It should be understood that, in embodiments of this application, the terminal device may alternatively be a chip in the terminal device, or a communication apparatus, a unit, a module, or the like having a D2D or V2X communication function, for example, a vehicle-mounted communication apparatus, a vehicle-mounted communication module, or a vehicle-mounted communication chip.

In embodiments of this application, a network device is a node in a radio access network (radio access network, RAN), and may also be referred to as a base station or a RAN node (or device). Currently, some examples of an access network device are: a next generation NodeB (next generation NodeB, gNB), a next generation evolved NodeB (next generation evolved NodeB, Ng-eNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), or a wireless fidelity (wireless fidelity, Wi-Fi) access point (access point, AP). The network device 201 may alternatively be a satellite or a future base station. The satellite may also be referred to as a high-altitude platform, a high-altitude aircraft, or a satellite base station. The network device may alternatively be another device that has a function of the network device. For example, the network device 201 may alternatively be a device that functions as a network device in D2D communication or vehicle-to-everything communication. The network device 201 may alternatively be a network device in a future possible communication system.

In some deployments, the network device may include a centralized unit (centralized unit, CU) and a distributed unit (distributed unit, DU). The network device may further include an active antenna unit (active antenna unit, AAU). The CU implements some functions of the network device, and the DU implements some other functions of the network device. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some processing functions of the physical layer, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

The following describes in detail embodiments of this application with reference to the accompanying drawings.

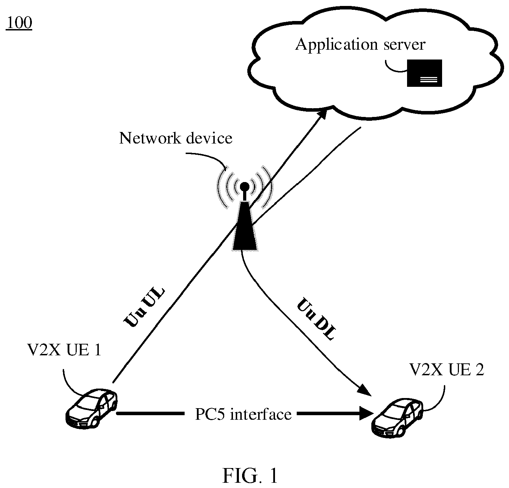

FIG. 1 is a schematic diagram of a V2X communication architecture 100. As shown in FIG. 1, the V2X communication architecture 100 includes a V2X application server (application server), V2X devices (for example, V2X UE 1 and V2X UE 2 shown in FIG. 1), and a network device. The V2X communication architecture includes two types of communication interfaces: a PC5 interface and a Uu interface. The PC5 interface is a direct communication interface between V2X UEs, and a direct communication link between the V2X UEs is also defined as a sidelink (sidelink, SL). Uu interface communication is a communication mode in which a sender V2X UE (for example, the V2X UE 1) sends V2X data to a network device through a Uu interface, the network device sends the V2X data to the V2X application server for processing, then the V2X application server delivers the V2X data to a network device, and the network device sends the V2X data to a receiver V2X UE (for example, the V2X UE 2). In the Uu interface communication mode, a network device that forwards uplink data of the sender V2X UE to the application server and a network device that forwards downlink data delivered by the application server to the receiver V2X UE may be a same network device, or may be different network devices. This may be specifically determined by the application server. It should be understood that, sending by the sender V2X UE to the network device is referred to as uplink (uplink, UL) transmission, and is represented by using Uu UL in FIG. 1; and sending by the network device to the receiver V2X UE is referred to as downlink (downlink, DL) transmission, and is represented by using Uu DL in FIG. 1.

To better understand the technical solution of this application, the following describes some terms or concepts.
(1) PC5 quality of service flow (PC5 quality of service flow, PC5 QoS flow) may be referred to as a QoS flow for short. One PC5 QoS flow is associated with one PC5 quality of service flow identifier (PC5 QoS flow indicator, PFI). The PFI is an identifier allocated by an upper layer of the terminal device. The PFI is used to uniquely identify a QoS flow for a Layer 2 destination address (destination L2 ID). One PFI is also associated with a group of QoS profiles (profiles). The QoS profile may include one or more of the following parameters: a PC5 interface 5G quality of service identifier (PC5 5G quality of service identifier, PQI), a guaranteed flow bit rate (guaranteed flow bit rate, GFBR), a maximum flow bit rate (maximum flow bit rate, MFBR), a minimum required communication range (minimum required communication range, range), an allocation and retention priority (allocation and retention priority, ARP), a PC5 link-aggregate maximum bit rate (PC5 LINK-aggregate maximum bit rate, PC5 LINK-AMBR), a default value (default value), a resource type (resource type), a priority level (priority level), a packet delay budget (packet delay budget, PDB), a packet error rate (packet error rate, PER), an average window (averaging window) (for a QoS flow of a GBR resource type and a delay-critical GBR resource type), a maximum data burst volume (maximum data burst volume) (for a QoS flow of a delay-critical GBR resource type), or the like. The resource type may be, for example, a guaranteed bit rate (guaranteed bit rate, GBR), a delay-critical GBR (delay-critical GBR), or a non-GBR (non-GBR).
(2) A sidelink radio bearer SLRB is a bearer that is at layer 2 and that is used to send and receive data on a sidelink. The SLRB includes a packet data convergence protocol (packet data convergence protocol, PDCP) entity, a radio link control (radio link control, RLC) entity, a logical channel (logical channel, LCH), or the like. One SLRB is uniquely associated with a group of address information, where the address information includes a source address identifier (for example, a source L2 ID) and a destination address identifier (for example, a destination L2 ID). The address information may further include a communication type (cast type). "cast type" may be unicast, multicast, or broadcast.
(3) "support", "association", or "allow" in embodiments of this application may indicate a same or similar meaning. When "A supports B" is involved, it may indicate that "A is associated with B" or "A allows B". For example, that a carrier index is associated with a QoS parameter may be understood as follows: A QoS flow corresponding to the QoS parameter supports transmission on a carrier indicated by the carrier index, or a QoS flow corresponding to the QoS parameter is allowed to be transmitted on the carrier indicated by the carrier index. When "supporting carrier information (or a carrier index)" is involved, it may be understood as "supporting a carrier indicated by the carrier information (or the carrier index)".
(4) An association relationship may also be referred to as a correspondence. That A and B have an association relationship may be understood as that A and B have a correspondence.
(5) In embodiments of this application, when two pieces of information are different, two parameters are different, or any two elements are different, it may refer to a case in which they are not completely the same (that is, partially the same and partially different), or it may refer to a case in which they are completely different.

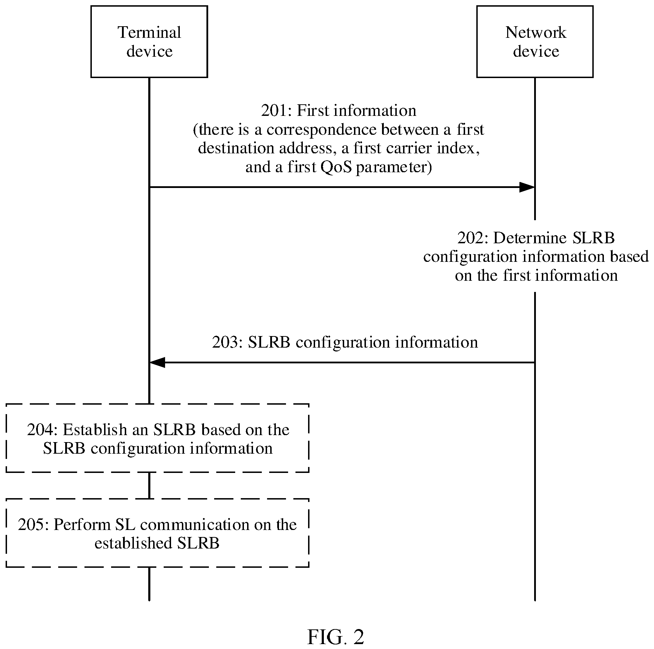

As shown in FIG. 2, a specific process of a sidelink communication method provided in an embodiment of this application is described below.

S201: A terminal device sends first information to a network device, and the network device receives the first information from the terminal device.

The first information includes a destination address, and further includes an association relationship between carrier information and a QoS parameter. One destination address may be associated with one or more pieces of carrier information, or one destination address may be associated with one or more QoS parameters. One piece of carrier information may correspond to one or more QoS parameters. One QoS parameter may correspond to one or more pieces of carrier information. The first information includes a specific QoS parameter and specific carrier information that have a correspondence, where the specific carrier information is in carrier information associated with a destination address, and the specific QoS parameter is in QoS parameters associated with the destination address.

The destination address in this embodiment of this application may be represented by using a destination address identifier or index, may be represented by using a communication type, or may be represented by using a combination of a destination address identifier/index and a communication type. Optionally, for unicast, the destination address identifier is an identifier of peer UE; for multicast, the destination address identifier is a group identifier (group destination L2 ID); and for broadcast, the destination address identifier is a destination address identifier corresponding to a service type. For example, the service type may be a provider service identifier (provider service identifier, PSID) or an intelligent transportation system-application identifier (intelligent transportation system-application identifier, ITS-AID).

The carrier information may include a carrier index, and may further include a synchronization type supported by a carrier.

The QoS parameter may include a QoS flow identifier, for example, a PFI. The QoS parameter may further include a QoS profile, for example, may be any one or more parameters in the QoS profile described in (1).

For example, the first information may include a first destination address, a first carrier index, and a first QoS parameter, and there is a correspondence between the first destination address, the first carrier index, and the first QoS parameter. Specifically, the first carrier index corresponds to the first destination address, the first QoS parameter corresponds to the first destination address, and the first carrier index corresponds to the first QoS parameter.

As described above, one destination address may be associated with a plurality of pieces of carrier information, or may be associated with a plurality of QoS parameters. In this case, there may be a case in which one QoS parameter corresponds to a plurality of carrier indexes, or there may be a case in which one carrier index corresponds to a plurality of QoS parameters.

It is assumed that the first information further includes a second carrier index, and there may be a correspondence between the first QoS parameter and the second carrier index. In this case, the first QoS parameter corresponds to the first carrier index and the second carrier index. Certainly, during actual application, the first QoS parameter may correspond to more carrier indexes.

Similarly, it is assumed that the first information further includes a second QoS parameter, and there may be a correspondence between the first carrier index and the second QoS parameter. In this case, the first carrier index corresponds to the first QoS parameter and the second parameter. Certainly, during actual application, the first carrier index may correspond to more QoS parameters.

In this embodiment of this application, that there is a correspondence or an association relationship between a QoS parameter and a carrier index may be understood as follows: A QoS flow corresponding to the QoS parameter in a corresponding destination address supports transmission on a carrier indicated by the carrier index, or the QoS flow corresponding to the QoS parameter in the corresponding destination address is allowed to be transmitted on the carrier indicated by the carrier index. The descriptions herein are applicable to the entire specification.

S202: The network device determines SLRB configuration information based on the first information.

S203: The network device sends the SLRB configuration information to the terminal device, and the terminal device receives the SLRB configuration information from the network device.

The SLRB configuration information includes one or more of the destination address, the QoS parameter, or the carrier information.

Optionally, after S203, S204 and S205 are further included.

S204: The terminal device establishes an SLRB based on the SLRB configuration information.

S205: The terminal device performs SL communication on the established SLRB.

After receiving the first information, the network device may determine, based on the first information, that there is the correspondence between the first destination address, the first QoS parameter, and the first carrier index. In this case, the network device may determine, based on the first information, that a first QoS flow corresponding to the first QoS parameter in the first destination address supports SL transmission on a first carrier indicated by the first carrier index, to configure a first SLRB that corresponds to the first carrier and to which the first QoS flow corresponding to the first QoS parameter in the first destination address is mapped. The SLRB configuration information may include the first QoS parameter, may include an identifier or an index (ID/index) of the first SLRB, or may include one or more of configuration parameters of protocol layers of the first SLRB, for example, a PDCP configuration parameter, an RLC configuration parameter, or an LCH configuration parameter of the first SLRB. The first QoS parameter corresponds to the identifier or the index of the first SLRB.

Certainly, the first information may include the first destination address, a plurality of QoS parameters, a plurality of carrier indexes, and a correspondence between the QoS parameters and the carrier indexes. The network device may determine, based on the first information, a carrier supported by a QoS flow corresponding to each QoS parameter in the first destination address, to configure an SLRB that corresponds to the supported carrier and to which the QoS flow in the first destination address is mapped.

The terminal device reports the first information to the network device. The first information includes the correspondence between the carrier index and the QoS parameter. In this way, the SLRB configuration determined by the network device is determined based on the carrier supported by the QoS flow, and the terminal is prevented from mapping, based on the SLRB configuration information, the QoS flow to an SLRB corresponding to an unsupported carrier.

Based on the foregoing descriptions, the following describes some optional implementations of this embodiment of this application.

Optionally, the QoS flow identifier (ID) is locally unique. For example, the QoS flow ID is a PFI (PC5 QoS flow identifier), and a PFI value is unique in one destination address. Optionally, the SLRB configuration information sent by the network device includes a destination address index/identifier, and may further include a PFI list. Each destination address identifier/index is associated with one PFI list.

Optionally, the QoS flow identifier may alternatively be globally unique. For example, the QoS flow identifier may uniquely indicate a set of information inside the terminal device, including a destination address, a carrier information list, and a QoS profile. When the QoS flow identifier is globally unique, a same QoS flow ID does not exist in carrier information lists with different destination addresses. The SLRB configuration information sent by the network device may include a carrier information list index or identifier, and may further include a QoS flow ID list. Optionally, each carrier information list index or identifier is associated with one QoS flow ID list. A carrier information list indicated by one carrier information list index or identifier includes one or more pieces of carrier information. The carrier information list may alternatively be replaced with one or more carrier indexes.

In this embodiment of this application, the carrier information may be represented by using a carrier index, may be represented by using a synchronization type supported by a carrier, or may be represented by using a combination of the carrier index and the synchronization type supported by the carrier. Optionally, an index or an identifier of the carrier information list may be used to indicate one or more carrier indexes. The terminal device may obtain the carrier index from a system information block (system information block, SIB) message received from the network device. The SIB message may carry an index of a carrier supported by a cell in which the terminal device is located. The identifier of the carrier information list may be an identifier allocated to the corresponding carrier information list when the terminal device reports the first information. The index of the carrier information list may be an index obtained by numbering a plurality of carrier information lists in sequence when the terminal device reports the first information. An identifier of a carrier list may be a unique identifier in a destination address, or the index of the carrier list may be a globally unique index. The globally unique index indicates that the index is unique in all destination addresses. Optionally, the identifier of the carrier information list may be an identifier of a service type. Optionally, the identifier of the carrier list may be a link identifier (link identifier). It may be understood that different carrier information lists may include some same carrier indexes.

Optionally, the correspondence between the carrier index and the QoS parameter may alternatively be replaced with a correspondence between a service type identifier and the QoS parameter. A first message sent by the terminal to the network device includes the first destination address, a first service type identifier, and the first QoS parameter. The first service type identifier corresponds to the first destination address, and the first QoS parameter corresponds to the first destination address. The first QoS parameter corresponds to the first service type identifier.

The first message may further include a second service type identifier, and there is also a correspondence between the first QoS parameter and the second service type identifier.

The first message may further include a second QoS parameter, and there is a correspondence between the first service type identifier and the second QoS parameter.

In conclusion, one service type identifier may correspond to one or more QoS parameters, and one QoS parameter may also correspond to one or more service type identifiers.

Optionally, the network device may obtain an association relationship between each service type identifier and each piece of carrier information from a core network or a V2X application server (V2X Application Server).

Optionally, the terminal device reports the association relationship between each service type identifier and each piece of carrier information to the network device.

The terminal device may perform SL communication with one or more destination addresses. In this case, the terminal device may request, from the network device, SLRB configuration information corresponding to the plurality of destination addresses. During actual application, the terminal device may report the plurality of destination addresses in the first information. For example, the first information includes a second destination address, a carrier index associated with the second destination address, a QoS parameter associated with the second destination address, and a correspondence between the carrier index and the QoS parameter. A reporting manner is similar to that of the first destination address.

The terminal device may determine the correspondence between the QoS parameter and the carrier index in the following manner.

An access stratum (access stratum, AS) of the terminal device obtains, from an upper layer of the terminal device, information that is denoted as second information. The second information may include information about a carrier supported by a service type. For example, the second information includes an identifier of the service type and carrier information. It may be understood that the carrier information carried in the second information obtained by the access stratum of the terminal device from the upper layer may be different from carrier information reported by the terminal device to the network device. For example, carrier indexes are different. Carrier indexes reported by the terminal device to the network device are used to distinguish between different carriers in a cell. The carrier information in the second information has a different function. In conclusion, the terminal device may determine, based on the information obtained from the upper layer, a carrier supported by each service type. The terminal device determines, based on the second information, a carrier supported by a service. It should be understood that the access stratum of the terminal device may further obtain third information from an upper layer of an upper-layer device. The third information includes information about a QoS flow of a corresponding service in a destination address. For example, the third information includes the destination address, a service identifier, and a QoS parameter. The terminal device may determine, based on the third information, that a service corresponding to the service type identifier in the destination address has a QoS flow corresponding to the QoS parameter. Further, the terminal device may determine a specific carrier on which SL transmission is supported by the QoS flow of the service corresponding to the service type identifier in the destination address.

The QoS parameter may be a QoS identifier A QoS identifier in the third information may be different from a QoS identifier in the first information, but indicates a same QoS flow in a same destination address.

The access stratum of the terminal device obtains the second information or the third information from the upper layer. The upper layer herein may be a layer above the access stratum of the terminal device, for example, a V2X layer, an application layer, or a layer between the V2X layer and the application layer. The access stratum of the terminal device may include, for example, one or more of a radio resource control (radio resource control, RRC) layer, a service data adaptation protocol (service data adaptation protocol, SDAP) layer, a packet data convergence protocol (packet data convergence protocol, PDCP) layer, a radio link control (radio link control, RLC) layer, and a media access control (media access control, MAC) layer. Optionally, the access stratum may further include a physical (physical, PHY) layer.

In this embodiment of this application, when the terminal device is in an RRC connected mode, the first information sent to the network device may be carried in a sidelink UE information (sidelink UE information, SUI). The SUI message is used to request an SLRB configuration. The SUI message includes content included in the first information. After receiving the SUI message, the network device determines the SLRB configuration based on the SUI message, and configures a corresponding SLRB for a QoS flow. Only QoS flows that support same carrier information are mapped to a same SLRB. The network device sends the SLRB configuration to the terminal device.

It may be understood that the first information may be reported in a full information reporting (full information reporting) manner or a delta information reporting (delta information reporting) manner. Full information reporting means that, if previously reported first information is still in a valid state at a current reporting moment, the first information still needs to be reported again at the current reporting moment. The delta information reporting manner means that first information content reported each time includes only latest changed first information.

Examples are used below to describe possible representation forms of the content in the first information. In the following examples, the carrier information is represented by using a carrier list, and each carrier list may include one or more pieces of carrier information. The carrier information may be a carrier index, or may be a synchronization type supported by a carrier. Any QoS parameter may include a QoS flow identifier, and may further include a QoS profile.

### Representation form 1:

As shown in Table 1, the first information includes a first destination address and a correspondence between carrier information and QoS parameters in the first destination address. The first destination address is associated with a carrier list (carrier list) 1, a carrier list 2, and a carrier list 3. The first destination address is associated with a QoS profile 1, a QoS profile 2, a QoS profile 3, a QoS profile 4, and a QoS profile 5. The QoS profile 1, the QoS profile 2, and the QoS profile 3 correspond to the carrier list 1, the QoS profile 1, the QoS profile 3, and the QoS profile 5 correspond to the carrier list 2, and the QoS profile 2, the QoS profile 3, and the QoS profile 4 correspond to the carrier list 3. Carrier information in the carrier list may be represented by using a carrier index. It is assumed that the carrier list 1 includes a carrier index 1, a carrier index 2, and a carrier index 3; the carrier list 2 includes the carrier index 1, the carrier index 3, and a carrier index 4; and the carrier list 3 includes a carrier index 5 and a carrier index 6. It should be understood that the carrier list may further include an identifier corresponding to the carrier list, and the QoS parameter may further include a QoS identifier corresponding to the QoS profile.

It is assumed that the first destination address is represented by using a destination address identifier and a communication type. An identifier of the first destination address is a destination layer 2 identifier (destination L2 ID 1), and the communication type is unicast (unicast).

**Table 1**

| Destination address | Carrier list | QoS parameter |
|---|---|---|
| Destination L2 ID 1 and unicast | Carrier index 1, carrier index 2, and carrier index 3 | QoS profile 1, QoS profile 2, and QoS profile 3 |
| | Carrier index 1, carrier index 3, and carrier index 4 | QoS profile 1, QoS profile 3, and QoS profile 5 |
| | Carrier index 5 and carrier index 6 | QoS profile 2, QoS profile 3, and QoS profile 4 |

The first information may further include correspondences between carrier information and QoS parameters in a plurality of destination addresses. Based on Table 1, as shown in Table 2, it is assumed that the first information further includes correspondences between QoS parameters and carrier information in a second destination address and a third destination address. For example, an identifier of the second destination address is destination L2 ID 1, and a communication type is broadcast (broadcast); and an identifier of the second destination address is destination L2 ID 2, and a communication type is unicast (unicast).

It is assumed that the second destination address is associated with the carrier indexes 1, 2, and 3 and the QoS profiles 1 to 5. The carrier index 1 and the carrier index 2 correspond to the QoS profiles 1 to 3, and the carrier index 1 and the carrier index 3 correspond to the QoS profiles 2 to 5.

It is assumed that the third destination address is associated with the carrier indexes 1 to 4 and the QoS profiles 1 to 5. The carrier indexes 1 to 3 correspond to the QoS profiles 1, 3, and 5, and the carrier index 1 and the carrier index 4 correspond to the QoS profiles 2, 4, and 5.

**Table 2**

| Destination address | Carrier list | QoS parameter |
|---|---|---|
| Destination L2 ID 1 and unicast | Carrier index 1, carrier index 2, and carrier index 3 | QoS profile 1, QoS profile 2, and QoS profile 3 |
| | Carrier index 1, carrier index 3, and carrier index 4 | QoS profile 1, QoS profile 3, and QoS profile 5 |
| | Carrier index 5 and carrier index 6 | QoS profile 2, QoS profile 3, and QoS profile 4 |
| Destination L2 ID 1 and broadcast | Carrier index 1 and carrier index 2 | QoS profile 1, QoS profile 2, and QoS profile 3 |
| | Carrier index 1 and carrier index 3 | QoS profile 2, QoS profile 3, QoS profile 4, and QoS profile 5 |
| Destination L2 ID 2 and unicast | Carrier index 1, carrier index 2, and carrier index 3 | QoS profile 1, QoS profile 3, and QoS profile 5 |
| | Carrier index 1 and carrier index 4 | QoS profile 2, QoS profile 4, and QoS profile 5 |

Table 1 and Table 2 are merely examples. During actual application, a correspondence between a carrier index and a QoS parameter may be determined based on an actual situation.

### Representation form 2:

A correspondence between carrier information and a QoS parameter in a destination address may alternatively be represented in the following manner. For example, the carrier information is represented by using a carrier list. Optionally, different carrier lists are distinguished by using identifiers or indexes of the carrier lists. One carrier list includes one or more carrier indexes.

As shown in Table 3a and Table 3b, with reference to the descriptions in Table 1, the first information includes a first destination address and correspondences between carrier information and QoS parameters in the first destination address. The first destination address is associated with a carrier list (carrier list) 1, a carrier list 2, and a carrier list 3. The first destination address is associated with a QoS profile 1, a QoS profile 2, a QoS profile 3, a QoS profile 4, and a QoS profile 5. The QoS profile 1 corresponds to the carrier list 1 and the carrier list 2, the QoS profile 2 corresponds to the carrier list 1 and the carrier list 3, the QoS profile 3 corresponds to the carrier list 1, the carrier list 2, and the carrier list 3, the QoS profile 4 corresponds to the carrier list 3, and the QoS profile 5 corresponds to the carrier list 2. It should be understood that, in this case, the correspondences between the QoS profiles and the carrier lists are represented as correspondences between the QoS profiles and indexes/identifiers of the carrier lists.

**Table 3a**

| Destination address | Carrier list |
|---|---|
| Destination L2 ID 1 and unicast | Carrier list 1 {carrier index 1, carrier index 2, and carrier index 3} |
| | Carrier list 2 {carrier index 1, carrier index 3, and carrier index 4} |
| | Carrier list 3 {carrier index 5 and carrier index 6} |

**Table 3b**

| QoS parameter | Carrier list |
|---|---|
| QoS profile 1 | Indexes or identifiers of carrier lists 1 and 2 |
| QoS profile 2 | Indexes or identifiers of carrier lists 1 and 3 |
| QoS profile 3 | Indexes or identifiers of carrier lists 1, 2, and 3 |
| QoS profile 4 | Index or identifier of carrier list 3 |
| QoS profile 5 | Index or identifier of carrier list 2 |

Similarly, the first information may further include correspondences between carrier information and QoS parameters in a plurality of destination addresses. Based on Table 3a and Table 3b, as shown in Table 4a and Table 4b, with reference to the descriptions in Table 2, it is assumed that the first information further includes correspondences between carrier information and QoS parameters in a second destination address and a third destination address. It should be understood that, in this case, the correspondences between the QoS profiles and the carrier lists are represented as correspondences between the QoS profiles and indexes/identifiers of the carrier lists. In addition, indexes/identifiers associated with carrier lists in different destination addresses may have a same value. For example, both a carrier list 1 and a carrier list 4 in Table 4 are represented by using a carrier list index 1. In this case, the carrier list index locally and uniquely represents one carrier list in one destination address. Optionally, in this case, the carrier list corresponding to the QoS profile may further include an identifier/index of the corresponding destination address.

**Table 4a**

| Destination address | Carrier list |
|---|---|
| Destination L2 ID 1 and unicast | Carrier list 1 {carrier index 1, carrier index 2, and carrier index 3} |
| | Carrier list 2 {carrier index 1, carrier index 3, and carrier index 4} |
| | Carrier list 3 {carrier index 5 and carrier index 6} |
| Destination L2 ID 1 and broadcast | Carrier list 4 {carrier index 1 and carrier index 2} |
| | Carrier list 5 {carrier index 1 and carrier index 3} |
| Destination L2 ID 2 and unicast | Carrier list 6 {carrier index 1, carrier index 2, and carrier index 3} |
| | Carrier list 7 {carrier index 1 and carrier index 4} |

**Table 4b**

| QoS parameter | Carrier list |
|---|---|
| QoS profile 1 | Indexes or identifiers of carrier lists 1, 2, 3, and 5 |
| QoS profile 2 | Indexes or identifiers of carrier lists 1, 3, 4, 5, and 7 |
| QoS profile 3 | Indexes or identifiers of carrier lists 1, 2, 3, 4, 5, and 6 |
| QoS profile 4 | Indexes or identifiers of carrier lists 3, 5, and 7 |
| QoS profile 5 | Indexes or identifiers of carrier lists 2, 5, 6, and 7 |

Table 3a, Table 3b, Table 4a, and Table 4b are merely examples. During actual application, a correspondence between a carrier index and a QoS parameter may be determined based on an actual situation.

In this way, the terminal device may indicate, to the network device by using the first information, carrier information corresponding to each QoS parameter in a destination address, and the network device determines an SLRB configuration based on the correspondence, so that a configuration of a QoS flow can be mapped to an SLRB corresponding to a carrier supported by the QoS flow, to avoid SL transmission of a data packet of the QoS flow by using a carrier frequency that is not supported by the QoS flow. Therefore, accuracy of the SLRB configuration is improved, and SL communication quality is improved.

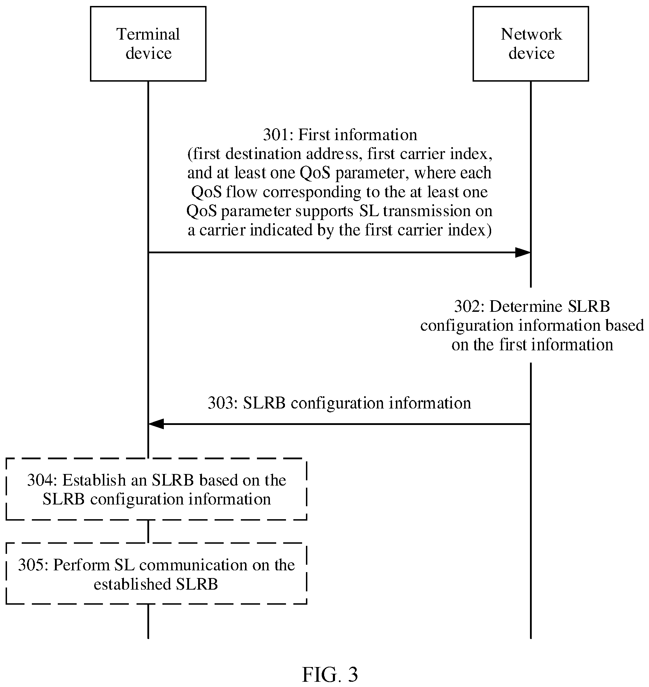

Based on a same technical concept and the foregoing embodiment, as shown in FIG. 3, an embodiment of this application provides another sidelink communication method. A specific process is as follows.

S301: A terminal device sends first information to a network device, and the network device receives the first information from the terminal device.

The first information includes a first destination address, a first carrier index, and at least one QoS parameter, there is a correspondence between the first destination address, the first carrier index, and the at least one QoS parameter, and each QoS flow corresponding to the at least one QoS parameter in the first destination address supports SL transmission on a carrier indicated by the first carrier index.

Optionally, the first information may further include a second carrier index, and each QoS flows corresponding to the at least one QoS parameter in the first destination address supports SL transmission on a carrier indicated by the second carrier index.

In conclusion, the first information includes one or more carrier indexes, and carriers indicated by the one or more carrier indexes are supported by each QoS flow corresponding to the at least one QoS parameter associated with the first destination address.

During actual application, the first destination address may be associated with a plurality of carrier indexes, and QoS flows corresponding to different QoS parameters support different carriers. The terminal device determines a carrier supported by all QoS flows corresponding to the different QoS parameters in the first destination address, and obtains a carrier index of the carrier supported by all the QoS flows. The first information carries the carrier index of the carrier supported by all the QoS flows.

S302: The network device determines SLRB configuration information based on the first information.

S303: The network device sends the SLRB configuration information to the terminal device, and the terminal device receives the SLRB configuration information from the network device.

The SLRB configuration information includes one or more of a destination address, the QoS parameter, or carrier information.

Optionally, after S303, S304 and S305 are further included.

S304: The terminal device establishes an SLRB based on the SLRB configuration information.

S305: The terminal device performs SL communication on the established SLRB.

Optionally, the terminal needs to determine information about the carrier supported by the QoS flow corresponding to the QoS parameter associated with the first destination address. For a specific method, refer to the foregoing descriptions "the terminal device may determine the correspondence between the QoS parameter and the carrier index in the following manner", and repeated details are not described herein again.

The embodiment in FIG. 3 is further described below by using an example.

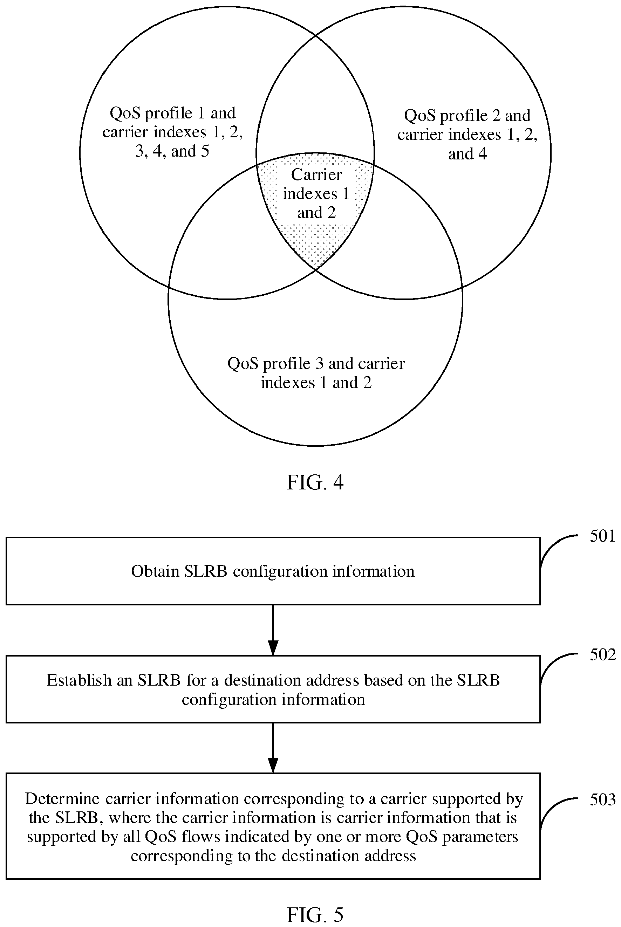

For ease of illustration, FIG. 4 is used to represent indexes of carriers supported by QoS flows corresponding to QoS parameters. It is assumed that the first destination address is associated with QoS parameters 1 to 3, and the first destination address is associated with carrier indexes 1 to 5. The QoS parameters 1 to 3 are all associated with a QoS profile 1. A QoS flow corresponding to the QoS parameter 1 supports carriers indicated by the carrier indexes 1 to 5. A QoS flow corresponding to the QoS parameter 2 supports carriers indicated by the carrier indexes 1, 2, and 4. A QoS flow corresponding to the QoS parameter 3 supports carriers indicated by the carrier indexes 1 and 2. The terminal device determines that carriers supported by all QoS flows corresponding to the QoS profile 1 are the carriers indicated by the carrier indexes 1 and 2. Carriers indicated by carrier indexes supported by all QoS flows corresponding to each QoS parameter associated with the QoS profile 1 are represented by using one circle, and the circle represents one set. In this case, an intersection set of carrier indexes supported by QoS flows corresponding to a plurality of QoS parameters associated with the QoS profile 1 is the carrier index 1 and the carrier index 2.

The first information reported by the terminal device may include: the first destination address, the carrier index 1, the carrier index 2, and the QoS parameters 1 to 3. Optionally, when the QoS parameters 1 to 3 correspond to a same QoS flow identifier, content of the QoS parameters 1 to 3 includes only the QoS profile 1 and/or the same QoS flow identifier. In this case, the first destination address is associated with the carrier indexes 1 and 2, and the first destination address is associated with the QoS parameters 1 to 3. In addition, all QoS flows corresponding to the QoS parameters 1 to 3 support the carriers indicated by the carrier indexes 1 and 2.

It should be understood that the first destination address may alternatively be associated with another QoS parameter, and a QoS profile associated with the another QoS parameter may be different from the QoS files associated with the QoS parameters 1 to 3. When carriers supported by QoS flows corresponding to the another QoS parameter are the same as the carriers supported by the QoS parameters 1 to 3, the carrier indexes 1 to 5 associated with the first destination address also correspond to the another QoS parameter.

In this embodiment of this application, the first information may include one or more carrier indexes, which are indexes of carriers supported by all QoS flows associated with the first destination address. If the first information includes a plurality of carrier indexes, the plurality of carrier indexes may be represented in a form of a list, or may be represented in a form of a set or a combination. For a representation form of the content included in the first information, refer to the representation form 1 and the representation form 2 in the embodiment shown in FIG. 2.

Optionally, if an index of a carrier supported by all QoS flows corresponding to a plurality of QoS parameters that are associated with the destination address and that have a same QoS profile is an empty set, an access stratum of the terminal device sends indication information to an upper layer (for example, a V2X layer). The indication information is used to indicate that a QoS flow or a service corresponding to the same QoS profile associated with the destination address is improper. Optionally, after receiving the indication information, the upper layer of the terminal device triggers a PCS-S link modification (PCS-S link modification) process with a peer terminal device, or modifies information about the QoS parameter/service associated with the destination address.

Optionally, if an index of a carrier supported by all QoS flows corresponding to a plurality of QoS parameters that are associated with the first destination address and that have a same QoS profile is an empty set, the first destination address in the first information reported by the terminal device to the network device does not include information about the plurality of QoS flows. This indicates that SL transmission of any carrier index by using the QoS flows corresponding to the plurality of QoS parameters is not supported in the first destination address. Alternatively, the plurality of QoS parameters are associated with one piece of indication information, and the indication information is used to indicate that SL transmission of any carrier index by using the QoS flows corresponding to the plurality of QoS parameters is not supported in the first destination address.

Optionally, if a carrier supported by all QoS flows corresponding to a plurality of QoS parameters that are associated with the first destination address and that have a same QoS profile has one index, the first destination address in the first information reported by the terminal device is associated with one piece of indication information. The indication information is used to indicate that the QoS flows corresponding to the plurality of QoS parameters in the first destination address do not support SL transmission on a plurality of carriers.

The terminal device reports, to the network device, a carrier index of a carrier supported by each QoS flow corresponding to a QoS parameter in a destination address. After receiving the reported first information, when configuring an SLRB for the terminal based on the first information, the network device does not configure a carrier that is not supported by the QoS flow in the destination address, to avoid SL transmission of a data packet of the QoS flow by using a carrier frequency that is not supported by the QoS flow. Therefore, accuracy of configuring the SLRB is improved, and SL communication quality is improved.

In the embodiments shown in FIG. 2 and FIG. 3, when the terminal device reports, to the network device, the correspondences between the QoS parameters and the carrier information in the plurality of destination addresses, the correspondences between the QoS parameters and the carrier information in different destination addresses may be carried in one piece of information, for example, reported by using the first information; or may be reported to the network device by using different information. For example, the correspondences between the QoS parameters and the carrier information in the first destination address are reported by using the first information, and the correspondences between the QoS parameters and the carrier information in the second destination address are reported by using other information.

For descriptions of some optional implementations and concepts that are not described in the embodiment in FIG. 3, refer to the descriptions in the embodiment in FIG. 2. Mutual reference may be made between the embodiments.

With reference to the foregoing embodiments, as shown in FIG. 5, an embodiment of this application further provides a sidelink communication method, and a specific process is as follows.

S501: A terminal device obtains SLRB configuration information.

The SLRB configuration information includes one or more QoS parameters. The SLRB configuration information may be briefly referred to as an SLRB configuration.

S502: The terminal device establishes an SLRB for a destination address based on the SLRB configuration information.

The SLRB is associated with one or more QoS parameters corresponding to the destination address.

S503: The terminal device determines carrier information corresponding to a carrier supported by the SLRB.

The carrier information is carrier information that is supported by all QoS flows indicated by one or more QoS parameters corresponding to the destination address.

For concept explanation of the carrier information, refer to the descriptions in the embodiment in FIG. 2 or FIG. 3.

The embodiment shown in FIG. 5 is applicable to an RRC connected mode and a non-RRC connected mode of the terminal.

Generally, when the terminal device is in the RRC connected mode, the terminal device sends an SUI message to a network device to request the SLRB configuration. After receiving the SUI message, the network device sends the SLRB configuration to the terminal device based on the SUI message. The terminal device may include, in the SUI message, a correspondence between the QoS parameter and a carrier index in the destination address.

When the terminal device is in an RRC inactive mode or an RRC idle mode, the terminal device may receive the SLRB configuration from a system information block (system information block, SIB) broadcast by the network device; or when the terminal device is out of coverage (out-of-coverage, OOC), the terminal device may obtain a pre-configured (pre-configured) SLRB configuration. After obtaining the SLRB configuration, the terminal device may establish a corresponding SLRB for a corresponding PC5 QoS flow to perform sidelink communication.

The following further describes an optional implementation of the embodiment in FIG. 5.

When the terminal device is in the non-RRC connected mode or the idle mode, the terminal device may obtain the SLRB configuration information by using the SIB or the pre-configuration (pre-configured). In this case, the network device cannot learn of a QoS parameter and carrier information that are associated with each destination address of the terminal device. The network device does not know a carrier supported by a QoS flow corresponding to the QoS parameter either. Therefore, when the network device configures the SLRB, the following problem may occur: QoS flows corresponding to QoS parameters associated with different carrier information are mapped to a same SLRB/LCH. For example, the network device configures a mapping relationship from a QoS profile to the SLRB. A same QoS profile may be associated with different QoS flows in a same destination address. For example, different services may have QoS flows having a same QoS profile requirement, and these QoS flows support different carrier information. An upper layer of the terminal device uses different PFIs to indicate different QoS flows, and the different QoS flows indicated by the different PFIs support different carrier information but are configured by the network device to be mapped to the same SLRB/LCH.

Based on the foregoing problem, the terminal device needs to first determine carrier information supported by the SLRB/LCH. The terminal device may determine whether the carrier information supported by the SLRB/LCH meets a limitation on logical channel prioritization (logical channel prioritization, LCP) of a carrier corresponding to a resource (grant) scheduled by the network device, or the terminal device may determine whether the carrier information supported by the SLRB/LCH meets a limitation on LCP of a resource obtained by the terminal device through resource selection. For example, the terminal device determines whether data of the LCH can be transmitted on a grant or a resource corresponding to the carrier for SL transmission.

The terminal device transmits, only when a determining result is yes, a data packet in the LCH/SLRB by using the grant or the resource corresponding to the carrier. In this way, SL transmission performed on the data packet in the LCH/SLRB based on a carrier not supported by the LCH/SLRB is avoided.

It should be understood that, the terminal device may determine, based on carrier information supported by a service type corresponding to a QoS flow corresponding to the QoS parameter, the carrier information supported by the QoS parameter. For detailed descriptions about how the terminal device obtains the carrier information associated with the QoS parameter in this part, reference may also be made to the descriptions of the related part in the embodiment in FIG. 2.

Optionally, the carrier information supported by the LCH/SLRB is carrier information of SL communication supported by a cell. For example, the carrier information supported by the LCH/SLRB is included in a carrier information list carried in a SIB message of the cell.

In a possible implementation, the terminal device uses same carrier information (an intersection part) of carrier information associated with all QoS flows/services mapped to the LCH/SLRB as carrier information supported by the current LCH/SLRB. Optionally, the terminal device further determines, based on a channel busy ratio (channel busy ratio, CBR), carrier information allowed by the LCH/SLRB. For example, only when a CBR corresponding to carrier information is less than or equal to a threshold, it may be determined that the carrier information is the carrier information supported by the LCH/SLRB. The CBR threshold may be configured by a network or specified in a protocol.

In consideration of packet data convergence protocol (packet data convergence protocol, PDCP) duplication, one SLRB is associated with a plurality of LCHs. If a PDCP duplication mechanism is used, one PDCP entity corresponds to two or more RLC entities and LCHs. The duplication mechanism means that the PDCP entity duplicates a PDCP PDU and delivers PDCP PDUs to the two or more associated RLC entities for processing and transmission. Duplication-based SL transmission cannot be performed on LCHs corresponding to all the PDCP entities.

According to the method in the embodiment in FIG. 5, when the terminal device determines carrier information supported by the SLRB, if a quantity of pieces of supported carrier information is less than a quantity of LCHs associated with the SLRB, the terminal device selects some LCHs to perform SL transmission based on the PDCP duplication, to ensure normal SL communication.

Optionally, the terminal device selects, according to a specific rule, an LCH on which SL transmission can be performed. This rule may be configured by the network or specified in the protocol. For example, the terminal device selects an LCH according to an ascending rule of logical channel identifiers (logical channel identifiers, LCIDs), or the terminal device selects an LCH according to a descending rule of LCH priorities corresponding to LCHs.

Optionally, the terminal device sends indication information to the network device, where the indication information is used to indicate that a current SLRB cannot support the PDCP duplication. For example, the indication information is sent by using RRC dedicated signaling or a MAC CE. The indication information may include one or more of the destination address, the SLRB configuration information (for example, an SLRB index or identifier), the supported carrier information, or associated LCH information.

Optionally, an access stratum of the terminal device may further send the indication information to the upper layer

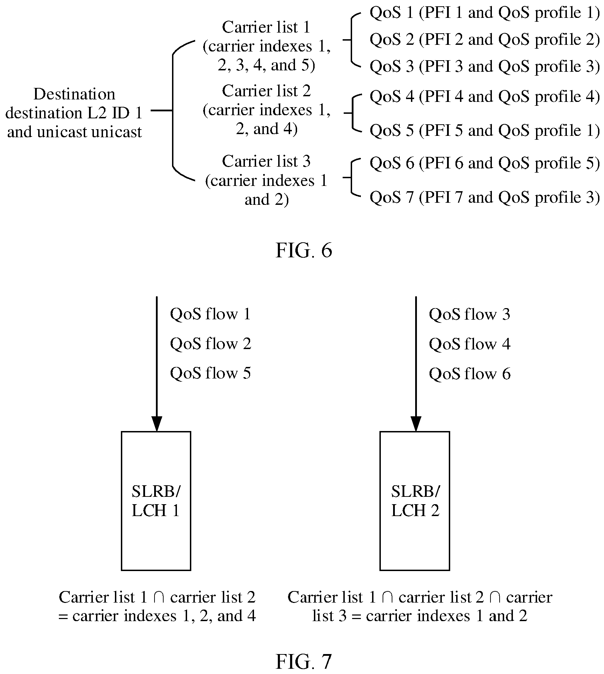

The embodiment in FIG. 5 is further described in detail below by using the examples shown in FIG. 6 and FIG. 7.

The SLRB configuration obtained by the terminal device from the network device is shown in FIG. 6. The carrier information is represented by using carrier lists, and one carrier list includes a plurality of carrier indexes. The QoS parameters are represented by using PFIs and QoS profiles.

As shown in FIG. 7, the terminal device establishes SLRBs/LCHs for the destination address. Flows corresponding to QoS parameters 1, 2, and 5 are mapped to an SLRB/LCH 1, and flows corresponding to QoS parameters 3, 4, and 6 are mapped to an SLRB/LCH 2. The terminal device determines, based on the SLRB configuration shown in FIG. 6, that carrier lists associated with QoS flows corresponding to the QoS parameters 1, 2, and 5 include a carrier list 1 and a carrier list 2. Carrier indexes (namely, an intersection set) included in both the carrier list 1 and the carrier list 2 are carrier indexes 1, 2, and 4. Therefore, the terminal device determines that carrier information allowed by the SLRB/LCH 1 is the carrier indexes 1, 2, and 4. Similarly, the terminal device determines, based on the SLRB configuration shown in FIG. 6, an intersection set of carrier indexes associated with QoS flows corresponding to the QoS parameters 3, 4, and 6, to determine that carrier information allowed by the SLRB/LCH 2 is the carrier indexes 1 and 2.

In conclusion, in the embodiment shown in FIG. 5, the network device configures the mapping relationship between the QoS profile and the SLRB in the SLRB configuration information. After receiving the SLRB configuration information sent by the network device, if the terminal device determines, based on the SLRB configuration information, that QoS flows corresponding to the QoS profile in a destination address support different carriers and are mapped to a same SLRB/LCH, the terminal device uses a carrier supported by all the QoS flows as a carrier mapped to the SLRB/LCH. Therefore, when a data packet corresponding to a QoS flow is sent, a carrier that is not supported by the QoS flow is not used to perform SL transmission.

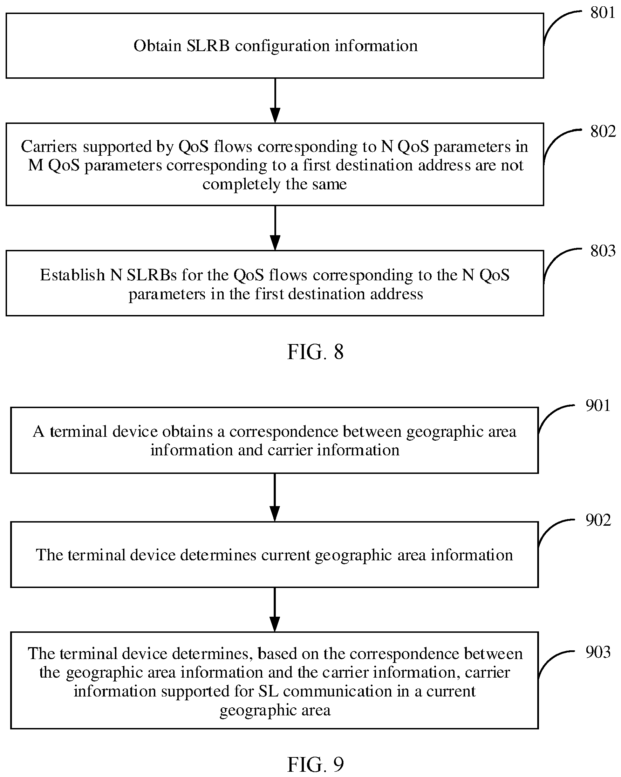

Based on the foregoing embodiments, as shown in FIG. 8, an embodiment of this application further provides a sidelink communication method, and a specific process is as follows.

S801: A terminal device obtains SLRB configuration information.

The SLRB configuration information includes M QoS parameters.

The terminal device may obtain the SLRB configuration information by using an RRC message, a SIB message, or a pre-configuration. The terminal device may be in an RRC connected mode or an RRC non-connected mode. For specific details of this step, refer to the descriptions of obtaining the SLRB configuration information in the embodiment shown in FIG. 5.

S802: The terminal device determines that carriers supported by QoS flows corresponding to N QoS parameters in M QoS parameters corresponding to a first destination address are not completely the same. That the carriers are not completely the same may be understood as that some carriers are different or all the carriers are different from each other.

M and N are integers greater than 1, and M may be the same as or different from N.

For example, as shown in FIG. 6, if the SLRB configuration information includes QoS parameters 1, 2, and 5, carriers supported by the QoS parameter 1 and the QoS parameter 5 are not completely the same. QoS flows corresponding to the QoS parameter 1 support carriers indicated by the carrier indexes 3 and 5, but QoS flows corresponding to the QoS parameter 5 do not support the carriers indicated by the carriers 3 and 5.

Specifically, the terminal device may determine, by using information obtained from an upper layer, an association relationship between a QoS flow corresponding to a QoS parameter and carrier information in each destination address, to determine, based on the association relationship, that carriers supported by QoS flows corresponding to at least two of the M QoS parameters in the first destination address are different or partially the same

S803: The terminal device establishes N SLRBs for the QoS flows corresponding to the N QoS parameters in the first destination address, where the QoS flows corresponding to the N QoS parameters that correspond to the first destination address are in one-to-one correspondence with the N SLRBs.

It should be understood that QoS flows corresponding to the other M-N QoS parameters may also be mapped to the corresponding N SLRBs based on the obtained SLRB configuration.

The terminal device determines, based on the obtained SLRB configuration, that the following problem may exist: Carriers supported by N QoS flows in one destination address are not completely the same, where N is greater than or equal to 2. The N QoS flows are mapped to a same SLRB/LCH, and at least one of the QoS flows is mapped to an SLRB/LCH corresponding to an unsupported carrier. "Unsupported" herein may be understood as "not fully supported" or "not supported at all". For this problem, the terminal device establishes N SLRBs/LCHs for the N QoS flows associated with the destination address, and the N QoS flows are in one-to-one correspondence with the N SLRBs/LCHs.

Optionally, if a plurality of QoS flows associated with one destination address support N different carrier lists, the terminal device establishes N SLRBs. N is an integer greater than 1.

Optionally, the terminal device allocates different SLRB IDs or LCH IDs to the N SLRBs/LCHs.

In conclusion, according to the embodiment in FIG. 8, the terminal device establishes, based on an SLRB configuration, a plurality of SLRBs/LCHs for a destination address. In this way, it can be ensured that all QoS flows mapped to one SLRB/LCH support same carrier information, so that SL transmission can be normally performed.

Currently, when performing SL communication, a terminal device needs to determine carrier information that can be supported in SL communication. However, supported carriers of terminal devices for performing SL communication in different geographical areas may be different. For example, different spectrum ranges are allocated for SL communication of the terminal devices in different countries and regions. Therefore, the terminal device needs to learn of carriers that can be supported within a current geographical area range, so that SL communication of the terminal device can meet policies and regulations and ensure quality of SL communication. In view of this, as shown in FIG. 9, this application further provides an SL communication method, and a specific process is as follows.

S901: A terminal device obtains correspondence between geographic area information and carrier information.

The terminal device may obtain the correspondence between the geographic area and the carrier information by using an RRC message, a SIB message, or a pre-configuration. The terminal device may be in an RRC connected mode or an RRC non-connected mode.

For example, the terminal device that is out of coverage (out of coverage, OOC) obtains the correspondence between the geographical area and the carrier information by using the pre-configuration.

It should be understood that the carrier information may include a carrier index and/or a synchronization type supported by a carrier.

It should be understood that different geographic area information may also correspond to same carrier information.

Optionally, a geographical location may be at a country or region level. For example, different countries or regions correspond to different geographical areas.

Optionally, a geographical location may be at a local level. For example, different provinces, cities, counties, towns, and the like correspond to different geographical areas.

Optionally, a geographical location may be at a cell level. For example, different cells correspond to different geographical areas. For example, at this time, the correspondence between the geographic area information and the carrier information is a correspondence between a cell global identifier (cell global identifier, CGI) and the carrier information.

Optionally, a geographical location may be at a zone (zone) level. For example, different zones in one cell correspond to different geographical areas.

It should be understood that the geographical location may alternatively be at another level. This is not limited in the present invention.

S902: The terminal device determines current geographic area information.

The terminal device may obtain the current geographical area information in a plurality of manners. For example, the terminal device obtains coordinates of a current geographical location by using a global positioning system (global positioning system, GPS) to determine the current geographical area information, or the terminal device obtains a cell identifier to determine the current geographical area information. The terminal device may obtain the cell identifier by reading a master information block (master information block, MIB) or a system information block (system information block, SIB) message.

Optionally, S902 may be performed before S901.

S903: The terminal device determines, based on the correspondence between the geographic area information and the carrier information, carrier information supported for SL communication in a current geographic area.

For example, the terminal device determines, based on S901 and S902, carrier information corresponding to the current geographic area information, and may select a resource based on the supported carrier information to perform SL transmission.

It should be understood that SL communication includes SL transmission and/or SL receiving.

In conclusion, the terminal device determines, by using the foregoing process, the carrier information supported in the current geographic area, to perform subsequent SL communication, so as to ensure that policies and regulations are met and quality of the SL communication is met.

In this case, introduction to the sidelink communication method provided in embodiments of this application is completed. It should be noted that the foregoing embodiments are based on a same concept, and mutual reference may be made to the methods in the embodiments. For example, mutual reference may be made to the descriptions of some concepts and the descriptions of optional implementations.

It should be noted that examples in the application scenarios in this application merely show some possible implementations, to help better understand and describe the method in this application. Persons skilled in the art may obtain examples of some evolution forms according to the reference signal indication method provided in this application.

In the foregoing embodiments provided in this application, the method provided in embodiments of this application is separately described from perspectives of the network device, the terminal, and interaction between the network device and the terminal. To implement functions in the method provided in the foregoing embodiments of this application, the network device and the terminal may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

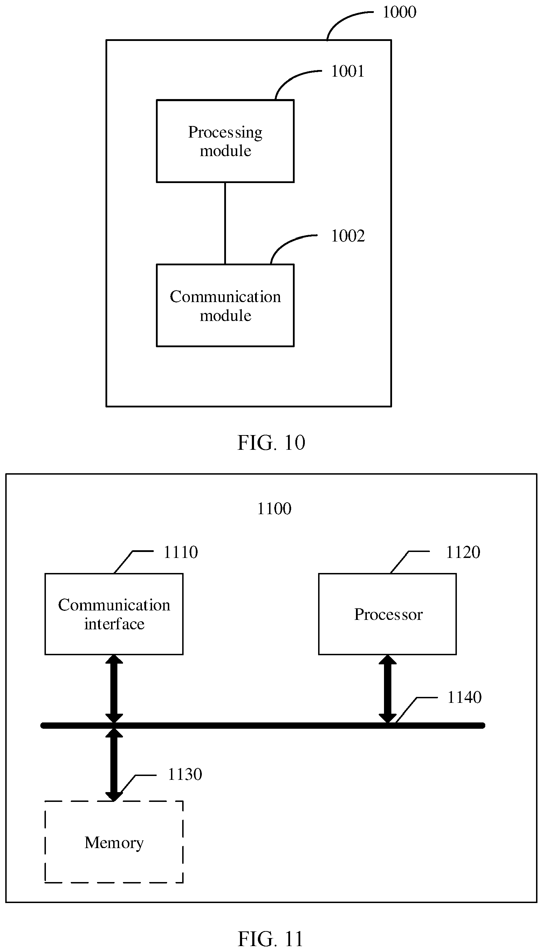

As shown in FIG. 10, based on a same technical concept, an embodiment of this application further provides an apparatus 1000. The apparatus 1000 may be a terminal device or a network device, an apparatus in the terminal device or the network device, or an apparatus that can be used together with the terminal device or the network device. In a design, the apparatus 1200 may include modules for performing the methods/operations/steps/actions performed by the terminal device or the network device in the foregoing method embodiments. The modules may be hardware circuits, may be software, or may be implemented by using the hardware circuits in combination with the software. In a design, the apparatus may include a processing module 1001 and a communication module 1002. The processing module 1001 is configured to invoke the communication module 1002 to perform a receiving function and/or a sending function.

When the apparatus is configured to perform the method performed by the terminal device:

In a possible example, the communication module 1002 is configured to: send first information to a network device, where the first information includes a first destination address, a first carrier index, and a first quality of service QoS parameter, and there is a correspondence between the first destination address, the first carrier index, and the first QoS parameter; and receive sidelink radio bearer SLRB configuration information from the network device.

In another possible example, the processing module 1001 is configured to: invoke the communication module 1002 to send first information to a network device, where the first information includes a first destination address, a first carrier index, and at least one quality of service QoS parameter, there is a correspondence between the first destination address, the first carrier index, and the at least one QoS parameter, and each QoS flow corresponding to the at least one QoS parameter supports a carrier indicated by the first carrier index; and receive sidelink radio bearer SLRB configuration information from the network device.

In another possible example, the processing module 1001 is configured to: obtain sidelink radio bearer SLRB configuration information, where the sidelink radio bearer SLRB configuration information includes one or more quality of service QoS parameters; establish an SLRB for a destination address based on the SLRB configuration information, where the SLRB is associated with one or more QoS parameters corresponding to the destination address; and determine carrier information supported by the SLRB, where the carrier information is carrier information supported by one or more pieces of QoS flow information that correspond to destination address information.

In another possible example, the processing module 1001 is configured to: obtain sidelink radio bearer SLRB configuration information, where the SLRB configuration information includes M quality of service QoS parameters, M pieces of QoS flow information are associated with M different carrier information lists, and M is an integer greater than 1; determine that carriers supported by N QoS flows corresponding to N QoS parameters in M QoS parameters corresponding to a first destination address are not completely the same; and establish N SLRBs for the QoS flows corresponding to the N QoS parameters that correspond to the first destination address, where the QoS flows corresponding to the N QoS parameters that correspond to the first destination address are in one-to-one correspondence with the N SLRBs.

In another possible example, the communication module 1002 is configured to: obtain a correspondence between geographic area information and carrier information; and determine, based on the correspondence between the geographic area information and the carrier information, carrier information supported for SL communication in a current geographic area.

When the apparatus is configured to perform the method performed by the network device:

In an example, the communication module 1002 is configured to receive first information from a terminal device, where the first information includes a first destination address, a first carrier index, and a first quality of service QoS parameter, and there is a correspondence between the first destination address, the first carrier index, and the first QoS parameter. The processing module 1001 is configured to determine sidelink radio bearer SLRB configuration information based on the first information. The communication module 1002 is further configured to send the SLRB configuration information to the terminal device.

In another example, the communication module 1002 is configured to receive first information from a terminal device, where the first information includes a first destination address, a first carrier index, and at least one quality of service QoS parameter, there is a correspondence between the first destination address, the first carrier index, and the at least one QoS parameter, and each QoS flow corresponding to the at least one QoS parameter supports a carrier indicated by the first carrier index. The processing module 1001 is configured to determine sidelink radio bearer SLRB configuration information based on the first information. The communication module 1002 is further configured to send the SLRB configuration information to the terminal device.

The processing module 1001 and the communication module 1002 may further be configured to perform another corresponding step or operation performed by the terminal device or the network device in the foregoing method embodiments. Details are not described herein again.

Division into the modules in embodiments of this application is an example, is merely division into logical functions, and may be other division during actual implementation. In addition, function modules in the embodiments of this application may be integrated into one processor, or each of the modules may exist alone physically, or two or more modules may be integrated into one module. The integrated module may be implemented in a form of hardware, or may be implemented in a form of a software function module.

FIG. 11 shows an apparatus 1100 according to an embodiment of this application. The apparatus 1100 is configured to implement the function of the terminal device or the network device in the foregoing methods. When implementing the function of the network device, the apparatus may be the network device, may be an apparatus in the network device, or an apparatus that can be used together with the network device. When implementing the function of the terminal device, the apparatus may be the terminal device, an apparatus in the terminal device, or an apparatus that can be used together with the terminal device. The apparatus may be a chip system. In this embodiment of this application, the chip system may include a chip, or may include the chip and another discrete component. The apparatus 1100 includes at least one processor 1120, configured to implement the function of the terminal device or the network device in the method provided in embodiments of this application. The apparatus 1100 may further include a communication interface 1110. In this embodiment of this application, the communication interface may be a transceiver, a circuit, a bus, a module, or a communication interface of another type, and is configured to communicate with another device by using a transmission medium. For example, the communication interface 1110 is used by a component in the apparatus 1100 to communicate with the another device. For example, when the apparatus 1100 is the network device, the another device may be a terminal device. When the apparatus 1100 is the terminal device, the another apparatus may be a network device. The processor 1120 receives and sends data through the communication interface 1110, and is configured to implement the method in the foregoing method embodiments. For example, when the function of the terminal device is implemented, the processor 1120 is configured to: send first information to a network device through the communication interface 1110, where the first information includes a first destination address, a first carrier index, and a first quality of service QoS parameter, and there is a correspondence between the first destination address, the first carrier index, and the first QoS parameter; and receive sidelink radio bearer SLRB configuration information from the network device.

In another possible example, the processor 1120 is configured to: send first information to a network device through the communication interface 1110, where the first information includes a first destination address, a first carrier index, and at least one quality of service QoS parameter, there is a correspondence between the first destination address, the first carrier index, and the at least one QoS parameter, and each QoS flow corresponding to the at least one QoS parameter supports a carrier indicated by the first carrier index; and receive sidelink radio bearer SLRB configuration information from the network device.

In another possible example, the processor 1120 is configured to: obtain sidelink radio bearer SLRB configuration information, where the sidelink radio bearer SLRB configuration information includes one or more quality of service QoS parameters; establish an SLRB for a destination address based on the SLRB configuration information, where the SLRB is associated with one or more QoS parameters corresponding to the destination address; and determine carrier information supported by the SLRB, where the carrier information is carrier information supported by one or more pieces of QoS flow information that correspond to destination address information.

In another possible example, the processor 1120 is configured to: obtain sidelink radio bearer SLRB configuration information, where the SLRB configuration information includes M quality of service QoS parameters, M pieces of QoS flow information are associated with M different carrier information lists, and M is an integer greater than 1; determine that carriers supported by N QoS flows corresponding to N QoS parameters in M QoS parameters corresponding to a first destination address are not completely the same; and establish N SLRBs for the QoS flows corresponding to the N QoS parameters that correspond to the first destination address, where the QoS flows corresponding to the N QoS parameters that correspond to the first destination address are in one-to-one correspondence with the N SLRBs.

In another possible example, the processor 1120 is configured to: obtain a correspondence between geographic area information and carrier information through the communication interface 1110; and determine, based on the correspondence between the geographic area information and the carrier information, carrier information supported for SL communication in a current geographic area.

When the function of the terminal device is implemented, the processor 1120 is configured to receive first information from a terminal device through the communication interface, where the first information includes a first destination address, a first carrier index, and a first quality of service QoS parameter, and there is a correspondence between the first destination address, the first carrier index, and the first QoS parameter. The processor 1120 is configured to determine sidelink radio bearer SLRB configuration information based on the first information. The processor 1120 is further configured to send the SLRB configuration information to the terminal device through the communication interface 1110.

Alternatively, when the function of the terminal device is implemented, the processor 1120 is configured to receive first information from a terminal device through the communication interface 1110, where the first information includes a first destination address, a first carrier index, and at least one quality of service QoS parameter, there is a correspondence between the first destination address, the first carrier index, and the at least one QoS parameter, and each QoS flow corresponding to the at least one QoS parameter supports a carrier indicated by the first carrier index. The processor 1120 is configured to determine sidelink radio bearer SLRB configuration information based on the first information. The processor 1120 is further configured to send the SLRB configuration information to the terminal device through the communication interface 1110.

The processor 1120 and the communication interface 1110 may further be configured to perform another corresponding step or operation performed by the terminal device or the network device in the foregoing method embodiments. Details are not described herein again.

The apparatus 1100 may further include at least one memory 1130, configured to store program instructions and/or data. The memory 1130 is coupled to the processor 1120. The coupling in this embodiment of this application is indirect coupling or a communication connection between apparatuses, units, or modules for information exchange between the apparatuses, the units, or the modules, and may be in electrical, mechanical, or other forms. The processor 1120 may operate with the memory 1130 collaboratively. The processor 1120 may execute the program instructions stored in the memory 1130. At least one of the at least one memory may be included in the processor

A specific connection medium between the communication interface 1110, the processor 1120, and the memory 1130 is not limited in this embodiment of this application. In this embodiment of this application, the memory 1130, the processor 1120, and the communication interface 1110 are connected by using a bus 1140 in FIG. 11. The bus is indicated by using a bold line in FIG. 11. A connection manner between other components is merely an example for description, and is not limited by reference. The bus may be classified into an address bus, a data bus, a control bus, and the like. For ease of representation, only one bold line is used to represent the bus in FIG. 11, but this does not mean that there is only one bus or only one type of bus.

When the apparatus 1000 and the apparatus 1100 are specifically chips or chip systems, the communication module 1002 and the communication interface 1110 may output or receive baseband signals. When the apparatus 1000 and the apparatus 1100 are specifically devices, the communication module 1202 and the communication interface 1110 may output or receive radio frequency signals. In embodiments of this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor, any conventional processor, or the like. The steps of the methods disclosed with reference to the embodiments of this application may be directly performed and completed by a hardware processor, or may be performed and completed by using a combination of hardware and software modules in the processor.

In embodiments of this application, the memory 1130 may be a non-volatile memory such as a hard disk drive (hard disk drive, HDD) or a solid-state drive (solid-state drive, SSD), or may be a volatile memory (volatile memory) such as a random access memory (random access memory, RAM). The memory is any other medium that can carry or store expected program code in a form of an instruction structure or a data structure and that can be accessed by a computer, but is not limited thereto. The memory in embodiments of this application may alternatively be a circuit or any other apparatus that can implement a storage function, and is configured to store program instructions and/or data.

Some or all of the operations and functions that are performed by the terminal and that are described in the foregoing method embodiments of this application, or some or all of the operations and functions that are performed by the network device and that are described in the foregoing method embodiments of this application may be completed by using a chip or an integrated circuit.

To implement the functions of the communication apparatus in FIG. 10 or FIG. 11, an embodiment of this application further provides a chip, including a processor, configured to support the communication apparatus in implementing the functions of the terminal or the network device in the foregoing method embodiments. In a possible design, the chip is connected to a memory or the chip includes the memory, and the memory is configured to store program instructions and data that are necessary for the communication apparatus.

An embodiment of this application provides a computer-readable storage medium that stores a computer program. The computer program includes instructions used to perform the foregoing method embodiments.

An embodiment of this application provides a computer program product including instructions. When the computer program product is run on a computer, the computer is enabled to perform the foregoing method embodiments.

Persons skilled in the art should understand that the embodiments of this application may be provided as methods, systems, or computer program products. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer usable program code.

This application is described with reference to the flowcharts and/or block diagrams of the methods, the devices (systems), and the computer program products according to embodiments of this application. It should be understood that computer program instructions may be used to implement each procedure and/or each block in the flowcharts and/or the block diagrams and a combination of the procedure and/or the block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto the computer or the another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

Further embodiments of the present invention are provided in the following. It should be noted that the numbering used in the following section does not necessarily need to comply with the numbering used in the previous sections.
Embodiment 1. A sidelink communication method, comprising:
   sending, by a terminal device, first information to a network device, wherein the first information comprises a first destination address, a first carrier index, and a first quality of service QoS parameter, and there is a correspondence between the first destination address, the first carrier index, and the first QoS parameter; and
   receiving, by the terminal device, sidelink radio bearer SLRB configuration information from the network device.
Embodiment 2. The method according to embodiment 1, wherein the first information further comprises a second carrier index, and there is a correspondence between the first QoS parameter and the second carrier index.
Embodiment 3. The method according to embodiment 1 or 2, wherein the first information further comprises a second QoS parameter, and there is a correspondence between the second QoS parameter and the first carrier index.
Embodiment 4. The method according to any one of embodiments 1 to 3, wherein a QoS parameter comprises a QoS flow identifier and/or a QoS profile.
Embodiment 5. The method according to any one of embodiments 1 to 4, wherein the SLRB configuration information comprises one or more of the QoS parameter, destination address information, and carrier information.
Embodiment 6. A sidelink communication method, comprising:
   sending, by a terminal device, first information to a network device, wherein the first information comprises a first destination address, a first carrier index, and at least one quality of service QoS parameter, there is a correspondence between the first destination address, the first carrier index, and the at least one QoS parameter, and each QoS flow corresponding to the at least one QoS parameter supports a carrier indicated by the first carrier index; and
   receiving, by the terminal device, sidelink radio bearer SLRB configuration information from the network device.
Embodiment 7. The method according to embodiment 6, wherein the QoS parameter comprises a QoS flow identifier and/or a QoS profile.
Embodiment 8. The method according to embodiment 6 or 7, wherein the method further comprises:
   obtaining, by the terminal device, second information, wherein the second information comprises a service identifier and the first carrier index; and
   determining, by the terminal device, that a QoS flow of a service corresponding to the service identifier supports the carrier indicated by the first carrier index.
Embodiment 9. A sidelink communication method, comprising:
   obtaining, by a terminal device, sidelink radio bearer SLRB configuration information, wherein the SLRB configuration information comprises M quality of service QoS parameters, M pieces of QoS flow information are associated with M different carrier information lists, and M is an integer greater than 1;
   determining, by the terminal device, that carriers supported by QoS flows corresponding to N QoS parameters in M QoS parameters corresponding to a first destination address are not completely the same; and
   establishing, by the terminal device, N SLRBs for the QoS flows corresponding to the N QoS parameters that correspond to the first destination address, wherein the QoS flows corresponding to the N QoS parameters that correspond to the first destination address are in one-to-one correspondence with the N SLRBs.
Embodiment 10. The method according to embodiment 9, wherein the terminal device allocates different SLRB identifiers or logical channel LCH identifiers to the M SLRBs.
Embodiment 11. The method according to embodiment 9 or 10, wherein the M SLRBs have a same PDCP entity parameter, a same RLC entity parameter, and a same LCH parameter.
Embodiment 12. A sidelink communication method, comprising:
   receiving, by a network device, first information from a terminal device, wherein the first information comprises a first destination address, a first carrier index, and a first quality of service QoS parameter, and there is a correspondence between the first destination address, the first carrier index, and the first QoS parameter; and
   determining, by the network device based on the first information, sidelink radio bearer SLRB configuration information, and sending the SLRB configuration information to the terminal device.
Embodiment 13. The method according to embodiment 12, wherein the first information further comprises a second carrier index, and there is a correspondence between the first QoS parameter and the second carrier index.
Embodiment 14. The method according to embodiment 12 or 13, wherein the first information further comprises a second QoS parameter, and there is a correspondence between the second QoS parameter and the first carrier index.
Embodiment 15. The method according to any one of embodiments 12 to 14, wherein a QoS parameter comprises a QoS flow identifier and/or a QoS profile.
Embodiment 16. The method according to any one of embodiments 12 to 15, wherein the SLRB configuration information comprises one or more of the QoS parameter, destination address information, and carrier information.
Embodiment 17. A sidelink communication method, comprising:
   receiving, by a network device, first information from a terminal device, wherein the first information comprises a first destination address, a first carrier index, and at least one quality of service QoS parameter, there is a correspondence between the first destination address, the first carrier index, and the at least one QoS parameter, and each QoS flow corresponding to the at least one QoS parameter supports a carrier indicated by the first carrier index; and
   determining, by the network device based on the first information, sidelink radio bearer SLRB configuration information, and sending the SLRB configuration information to the terminal device.
Embodiment 18. The method according to embodiment 17, wherein the QoS parameter comprises a QoS flow identifier and/or a QoS profile.
Embodiment 19. A communication apparatus, comprising a processor and a communication interface, wherein the communication interface is configured to communicate with another communication apparatus; and the processor is configured to run a set of programs, to enable the communication apparatus to implement the method according to any one of embodiments 1 to 11.
Embodiment 20. A communication apparatus, comprising a processor and a communication interface, wherein the communication interface is configured to communicate with another communication apparatus; and the processor is configured to run a set of programs, to enable the communication apparatus to implement the method according to any one of embodiments 12 to 18.
Embodiment 21. A computer-readable storage medium, storing computer-readable instructions, wherein when the computer-readable instructions are run on a communication apparatus, the communication apparatus is enabled to perform the method according to any one of embodiments 1 to 18.
Embodiment 22. A chip, wherein the chip is connected to a memory or the chip comprises the memory, and is configured to read and execute a computer program stored in the memory, to implement the method according to any one of embodiments 1 to 11.
Embodiment 23. A chip, wherein the chip is connected to a memory or the chip comprises the memory, and is configured to read and execute a computer program stored in the memory, to implement the method according to any one of embodiments 12 to 18.

Although some preferred embodiments of this application have been described, persons skilled in the art can make changes and modifications to these embodiments once they learn of the basic inventive concept. Therefore, the following claims are intended to be construed as to cover the preferred embodiments and all changes and modifications falling within the scope of this application.

It is clear that persons skilled in the art can make various modifications and variations to embodiments of this application without departing from the spirit and scope of the embodiments of this application. In this case, this application is intended to cover these modifications and variations provided that they fall within the scope of protection defined by the following claims and their equivalent technologies.

## Claims

1. A sidelink communication method, comprising:
sending first information to a network device, wherein the first information comprises a first destination address, a first carrier index list, a first quality of service QoS parameter, a second carrier index list, and a second QoS parameter, there is a correspondence between the first carrier index list and the first QoS parameter, and there is a correspondence between the second carrier index list and the second QoS parameter; and
receiving sidelink radio bearer SLRB configuration information from the network device.

2. The method according to claim 1, wherein the first QoS parameter comprises a first QoS flow identifier and/or a first QoS profile, and the second QoS parameter comprises a second QoS flow identifier and/or a second QoS profile.

3. The method according to claim 1 or 2, wherein the SLRB configuration information comprises at least one of the following: destination address information, one or more of QoS parameters corresponding to the destination address, and carrier information.

4. The method according to claim 3, wherein the method further comprises:
establishing an SLRB for the destination address based on the SLRB configuration information, wherein the SLRB is associated with one or more QoS parameters corresponding to the destination address.

5. The method according to claim 4, wherein the method further comprises:
determining carrier information corresponding to the carriers supported by the SLRB, wherein the carrier information is an information of carrier supported by all QoS flows indicated by one or more QoS parameters corresponding to the destination address.

6. A sidelink communication method, comprising:
receiving first information from a terminal device, wherein the first information comprises a first destination address, a first carrier index list, a first quality of service QoS parameter, a second carrier index list, and a second QoS parameter, there is a correspondence between the first carrier index list and the first QoS parameter, and there is a correspondence between the second carrier index list and the second QoS parameter; and
sending sidelink radio bearer SLRB configuration information to the terminal device.

7. The method according to claim 6, wherein the first QoS parameter comprises a first QoS flow identifier and/or a first QoS profile, and the second QoS parameter comprises a second QoS flow identifier and/or a second QoS profile.

8. The method according to claim 6 or 7, wherein the SLRB configuration information comprises at least one of the following: destination address information, one or more of QoS parameters corresponding to the destination address, and carrier information.

9. An apparatus, wherein the apparatus is configured to perform the method according to any one of claims 1 to 5 or to perform the method according to any one of claims 6 to 8.

10. A computer readable storage medium comprising instructions, wherein which, when executed by a computer device, cause the computer device to perform the method according to any one of claims 1 to 5 or to perform the method according to any one of claims 6 to 8.

11. A computer program product, comprising instructions, wherein which, when executed by a computer device, cause the computer device to perform the method according to any one of claims 1 to 5 or to perform the method according to any one of claims 6 to 8.
